# EUROPEAN PATENT APPLICATION

(11) **EP 1 698 521 A1**
(43) Date of publication of application: **06.09.2006**
(21) Application number: 06003269.5
(22) Date of filing: 17.02.2006
(51) Int. Cl.: B60R 21/013, B60R 21/16, B60N 2/02, B60N 2/427

(54) **Occupant protection device and method for a vehicle**

(30) Priority: 04.03.2005 JP 2005061195; 04.03.2005 JP 2005061212; 07.03.2005 JP 2005062854
(71) Applicant: Mazda Motor Corporation, Aki-gun, Hiroshima 730-8670 (JP)
(72) Inventor: Fujishiro, Teruhito c/o Mazda Motor Corporation, Hiroshima 730-8670 (JP); Ozeki, Hozumi c/o Mazda Motor Corporation, Hiroshima 730-8670 (JP); Kaeriyama, Hideharu c/o Mazda Motor Corporation, Hiroshima 730-8670 (JP); Funahashi, Ryoji c/o Mazda Motor Corporation, Hiroshima 730-8670 (JP); Hirata, Motoharu c/o Mazda Motor Corporation, Hiroshima 730-8670 (JP); Satani, Kenji c/o Mazda Motor Corporation, Hiroshima 730-8670 (JP); Nakayama, Hiroshi c/o Mazda Motor Corporation, Hiroshima 730-8670 (JP); Miyahara, Tamio c/o Mazda Motor Corporation, Hiroshima 730-8670 (JP); Kobayashi, Akihiro c/o Mazda Motor Corporation, Hiroshima 730-8670 (JP)
(74) Representative: Müller-Boré & Partner Patentanwälte

(57) **Abstract**

A seat cushion airbag unit **51** is provided at each seat and includes a seat cushion airbag **51a**. The seat cushion airbag **51a** is disposed in an inboard portion of a seat cushion **33** of the seat so as to support an inboard portion of buttocks of an occupant **P** in the seat. The seat cushion airbag **51a** is changed from its inflated state from its shrunk state when the side crash or rollover of the vehicle **1** is predicted by a controller. Thereby, the occupant's head is moved toward the center of the vehicle **1**. Accordingly, the occupant protection device **50** can promptly move the occupant's head toward the center of the vehicle, preventing the head from hitting against the vehicle roof, at the vehicle side crash or rollover.

## Description

The present invention relates to an occupant protection device and method for a vehicle.

Conventionally, the occupant protection device for a vehicle is known, in which an occupant (passenger) seated in a vehicle seat is prevented from hitting against a door or the like at a vehicle side crash or rollover.

For example, Japanese Patent Laid-Open Publication No. 2004-9798 discloses the occupant protection device for a vehicle in which the upper half or portion of occupant's body is moved away from the door at the vehicle side crash or rollover. This device comprises the moving device to move the occupant's head toward the center of the vehicle at the vehicle side crash or rollover. This moving device includes the airbag accommodated in the outboard (door-side) portion of the seat cushion and the movement portion operative to inflate the airbag at the vehicle side crash or rollover. Herein, the inflated airbag raises the outboard portion of the seat cushion. Thereby, the outboard portion of buttocks of the occupant is pushed up. Accordingly, the upper half of the occupant's body leans toward the center of the vehicle and thereby the occupant's head is moved toward the center of the vehicle, so the upper half of the occupant's body can be moved away from the door.

Likewise, Japanese Patent Laid-Open Publication No. 10-166918 discloses the occupant protection device for a vehicle in which the upper half of the occupant's body can be moved away from the door at the vehicle side crash. Herein, the push frame is installed within the closed section of the cross member installed tight in the seat setting position of the floor panel in a state that its lateral side part is projected into the section of the side sill and the side end part is adjacently opposed to the inner side face of the side sill outer, and then the seat is attached to this push frame with bolts and the like. In time of the vehicle side crash, immediately after the side sill outer gets deforming inward, the push frame is forcibly pressed and its engagement with the cross member is released. Thereby, the seat is moved inward along with the push frame, so the upper half of the occupant's body can be moved away from the door.

However, the devices disclosed by the above-described publications still have some problems to be improved.

Since the weight of occupant's body is relatively heavy and the body itself has flexibility to a certain degree, it may be difficult that the device disclosed in the former publication pushes up the outboard portion of the occupant's buttocks so quickly that the occupant's head could be moved toward the center of the vehicle promptly at the vehicle side crash or rollover. Also, the devise may require the relatively large-sized device. Furthermore, since the outboard portion of the occupant's buttocks is pushed up from its initial position, the occupant's head inevitably rises upward to a certain extent. Accordingly, there is a concern that the occupant's head would hit against the vehicle roof according to this control at the vehicle side crash or rollover.

Meanwhile, according to the device disclosed in the latter publication, the movement of the vehicle side crash is mechanically transferred to the seat, and thereby the upper half of the occupant's body is moved away from the door. Accordingly, this device would also have a room to make improvements in promptness of the occupant's head movement toward the vehicle center.

The present invention has been devised in view of the above-described problems, and an object of the present invention is to provide the occupant protection device for a vehicle that can promptly move the occupant's head toward the center of the vehicle, preventing the head from hitting against the vehicle roof, at the vehicle side crash or rollover.

This object is solved by the occupant protection device for a vehicle according to the present invention of claim 1 and by the occupant protection method according to claim 20. Preferred embodiments of the present invention are subject of the dependent claims.

According to the present invention, there is provided an occupant protection device for a vehicle, comprising a determining device operative to electrically predict or detect a vehicle side crash and/or rollover; and a moving device operative to move an occupant's head substantially toward a center of the vehicle, preferably substantially without a rise in a position of the occupant's head, when the vehicle side crash or rollover is predicted and/or detected by the determining device.

Accordingly, since the occupant's head is moved toward the center of the vehicle without the rise in its position when the vehicle side crash or rollover is electrically predicted or detected, the movement of the occupant's head toward the center of the vehicle can be done promptly, and the head can be properly prevented from hitting against the vehicle roof.

According to an embodiment of the present invention, the moving device comprises a support portion operative to support an inboard portion of buttocks of the occupant, and a movement portion operative to deform, change and/or remove the support portion, thereby lowering the inboard portion of the occupants's buttocks when the vehicle side crash or rollover is predicted or detected by the determining device.

Accordingly, when the vehicle side crash or rollover is predicted or detected by the determining device, the support portion is deformed, changed or removed by the movement portion and thereby the inboard portion of the occupants' buttocks is lowered. Herein, the gravity (weights of the occupant and seat components) acting downward assists the inboard portion of the occupants' buttocks to be lowered, so this downward movement can be done in a relatively short time (promptly). Thus, the occupant's head can be moved promptly substantially toward the center of the vehicle. Also, since the inboard portion of the occupants' buttocks preferably is lowered, the occupant's head is moved substantially downward. As a result, the head can be properly prevented from hitting against the vehicle roof.

According to another embodiment of the present invention, the support portion is at least partly accommodated in an inboard portion of a seat cushion of the seat, and the movement portion is configured so as to deform and/or change the support portion.

Accordingly, since the support portion may be designed so as to support substantially only the occupant because it is accommodated in the inboard portion of the seat cushion of the seat, the structure of the support portion can be made simple.

According to another embodiment of the present invention, the support portion comprises, or preferably is, a seat mount that is located substantially below an inboard portion of the seat, and the movement portion is configured so as to bend or remove the seat mount.

Accordingly, since the support portion is comprised of the seat mount and thereby the seat cushion needs not to be modified substantially, the comfortable sitting of the seat can be maintained properly.

According to another embodiment of the present invention, the occupant protection device further comprises a seatbelt device whose inboard end portion is fixed to or close or near an inboard end portion of the seat, wherein the seatbelt device comprises a seatbelt to restrain the occupant in the seat and a tension mechanism to apply a tension to the seatbelt according to a movement of the movement portion, thereby restraining a lower portion or half of an occupant's body in the seat cushion.

Accordingly, since the tension is applied to the seatbelt by the tension mechanism according to the movement and thereby the lower half or portion of the occupant's body is restrained in the seat cushion, the lower portion or half of the occupant's body is pulled downward. Thereby, by using the gravity and this downward pulling, the inboard portion of the occupants' buttocks can be lowered in a shorter time (more promptly). As a result, the occupant's head can be moved toward the center of the vehicle in the shorter time.

According to another embodiment of the present invention, the occupant protection device for a vehicle further comprises a seatbelt device whose inboard end portion is fixed to or near a central portion of a vehicle body, wherein the seatbelt device comprises the seatbelt to restrain the occupant in the seat and the tension mechanism to apply the tension to the seatbelt according to the movement of the movement portion, thereby restraining the lower half or portion of an occupant's body in the seat cushion.

Accordingly, the same function and effect as above can be attained.

According to another embodiment of the present invention, the tension mechanism is configured so as to apply the tension to the seatbelt according to the movement of the movement portion, thereby restraining the lower portion or half of the occupant's body in the seat cushion and an upper portion of the occupant's body in a seat back, a restraint timing of the lower half or portion of the occupant's body in the seat cushion being earlier than that of upper portion of the occupant's body in the seat back, or a restraint force of the lower half or portion of the occupant's body in the seat cushion being greater than that of the upper portion of the occupant's body in the seat back along with the substantially same restraint timing.

Accordingly, since the restraint timing of the lower half or portion of the occupant's body in the seat cushion is configured so as to be earlier than that of upper portion of the occupant's body in the seat back, or the restraint force of the lower half or portion of the occupant's body in the seat cushion is configured to be greater than that of the upper portion of the occupant's body in the seat back along with the same restraint timing, the restraint of the upper half or portion of the occupant's body in the seat back is adjusted properly while the occupant's head is moved toward the center of the vehicle. Thereby, the movement of the occupant's head substantially toward the center of the vehicle can be attained properly despite the restraint of the upper portion or half of the occupant's body in the seat back.

According to another embodiment of the present invention, the occupant protection device for a vehicle further comprises a pressing device that is provided at a side door, a pillar and/or a side wall portion of the vehicle and operative to push the occupant inward during or after an operation of the moving device.

Accordingly, since the occupant is pushed inward by the pressing device during or after the operation of the moving device, the movement of the occupant's head toward the center of the vehicle by the moving device is promoted. Thus, the occupant's head can be moved substantially toward the center of the vehicle in the relatively short time.

According to another embodiment of the present invention, the pressing device is configured so as to push an outboard portion of an occupant's chest substantially inward.

Accordingly, since the outboard portion of the occupant's chest that is relatively hard is pushed by the pressing device, the movement of the occupant's head toward the center of the vehicle by the moving device can be further promoted.

According to another embodiment of the present invention, the pressing device is configured so as to operate after the operation of the moving device.

Accordingly, since the pressing device operates (starts its operation) after the operation of the moving device (operation start), the occupant is not forced to take an uncomfortable position and thus the occupant can be pushed inward surely by the pressing device.

According to another embodiment of the present invention, the pressing device comprises a pressing airbag operative to be inflated inward after the vehicle side crash or rollover is predicted and when the vehicle side crash or rollover is detected by the determining device.

Accordingly, since the pressing device is configured of the airbag, the structure of the pressing device can be made simple.

Herein, since the airbag that has been inflated once may not return to its initial state without some particular operations, it is preferable that the inflation of the airbag is not carried out when the real vehicle side crash or rollover has been avoided.

According to the above-described embodiment, the pressing airbag is inflated substantially inward after the vehicle side crash or rollover is predicted and when the vehicle side crash or rollover is detected by the determining device. Namely, when the vehicle side crash or rollover is not detected by the determining device, the pressing airbag is not inflated. Thus, the inflation of the pressing airbag is prevented when the vehicle side crash or rollover has been avoided.

According to another embodiment of the present invention, the occupant protection device for a vehicle further comprising a side airbag that is accommodated within the seat and operative to be inflated so as to cover an outboard portion of an upper portion or half of an occupant's body when the vehicle side crash or rollover is predicted or detected by the determining device, and the pressing device comprises a pressing airbag operative to be inflated inward and push the side airbag inward that is under inflation or inflated.

Generally, the side airbag is an airbag that is configured so as to be inflated widely.

According to the above-described embodiment, the pressing airbag pushes inward the side airbag that is under inflation or inflated. Thereby, the pressing airbag can properly use the relatively large side airbag, so the relatively large area can be pushed inward. Accordingly, the occupant can be pushed inward surely and properly regardless of the occupant's sitting position. As a result, the occupant's head can be moved surely toward the center of the vehicle.

According to another embodiment of the present invention, the occupant protection device for a vehicle further comprises a seat slide mechanism to enable the seat to slide in a vehicle longitudinal direction, and a drive device to operate the seat slide mechanism, wherein the seat is positioned by the seat slide mechanism when the vehicle side crash or rollover is predicted or detected by the determining device in such a manner that an outboard portion of the occupant is at least partly opposed to the pressing device.

Accordingly, since the seat is moved by the seat slide mechanism when the vehicle side crash or rollover is predicted or detected by the determining device such that the outboard portion of the occupant is opposed to the pressing device, the occupant can be surely moved inward by the pressing device despite of the seat's initial position. As a result, the occupant's head can be moved surely substantially toward the center of the vehicle.

According to another embodiment of the present invention, the moving device is configured so as to lower an inboard portion of buttocks of the occupant when the vehicle side crash or rollover is predicted or detected by the determining device.

Accordingly, when the vehicle side crash or rollover is predicted or detected by the determining device, the inboard portion of buttocks of the occupant is lowered by the moving device. Herein, the outboard portion of the occupant's chest preferably may not be changed in height during the operation of the moving device and after that operation. Thus, the outboard portion of the occupant's chest can be pushed surely by the pressing device.

According to another embodiment of the present invention, the vehicle includes a plurality of seats including a driver's seat, and the moving device is configured so as to move the occupants' heads seated in the plural seats toward the center of the vehicle by changing positions and/or forms of the plural seats in such a manner that a changing degree of the position and/or form of the driver's seat is smaller than that of a seat other than the driver's seat.

Accordingly, when the vehicle side crash or rollover is predicted or detected by the determining device, the occupants' heads seated in the plural seats are moved toward the center of the vehicle by changing positions and/or forms of the plural seats including the driver's seat. Herein, since the changing degree (extent) of the position and/or form of the driver's seat is smaller than that of the seat other than the driver's seat, the changing degree of the driver's position can be made relatively small. Thus, when the vehicle side crash is relatively small, the vehicle rollover is in the early stage, or the vehicle side crash or rollover is predicted, the driver can maneuver the vehicle properly to avoid the vehicle side crash or rollover.

Also, since the occupants' heads seated in the plural seats are moved substantially toward the center of the vehicle by changing positions or forms of the plural seats including the driver's seat when the vehicle side crash or rollover is predicted or detected by the determining device as described above, the protection performance of the occupant protection device can be maintained on a high level.

Further, since the changing degree of the driver's position preferably is made relatively small as described above, a dangerous situation can be avoided in which the driver would stop operations of a brake pedal or an accelerator and thereby the vehicle traveling would become unstable.

According to another embodiment of the present invention, the vehicle includes a plurality of seats including the driver's seat, and the moving device is configured so as to move the occupant's head seated in at least one of the plural seats that is other than the driver's seat substantially toward the center of the vehicle by changing position or form of the at least one of the plural seats.

Accordingly, when the vehicle side crash or rollover is predicted or detected by the determining device, the head of the occupant seated in at least one of the plural seats that is other than the driver's seat is moved substantially toward the center of the vehicle by changing position or form of the at least one of the plural seats. Namely, the position or form of the driver's seat is substantially not changed when the vehicle side crash or rollover is predicted or detected by the determining device. Thus, the driver's position is substantially not changed either. Accordingly, when the vehicle side crash is relatively small, the vehicle rollover is in the early stage, or the vehicle side crash or rollover is predicted, the driver can maneuver the vehicle properly to possibly avoid the vehicle side crash or rollover.

Also, since the occupant's head seated in at least one of the plural seats that is other than the driver's seat is moved substantially toward the center of the vehicle by changing position or form of the at least one of the plural seats when the vehicle side crash or rollover is predicted or detected by the determining device as described above, the protection performance of the occupant protection device can be maintained on the high level.

Further, since the driver's position is not changed, the dangerous situation can be avoided in which the driver would stop operations of the brake pedal or the accelerator or its operations would be negatively influenced and thereby the vehicle traveling would become unstable.

According to another embodiment of the present invention, the determining device is configured so as to predict or detect the vehicle rollover, and the moving device is configured so as to move an upper portion or half of body of the occupant substantially toward the center of the vehicle when the vehicle rollover is predicted or detected by the determining device.

Herein, when the vehicle traveling is in an unstable state, such as a traveling situation where the vehicle is about to be rolled over receiving a relatively large lateral G acting on the vehicle laterally (including a situation where the vehicle travels with wheels located at either one side of the vehicle right and left sides that contact a ground surface), or where the vehicle is rolled over, the movement of the upper portion or half of the occupant's body substantially toward the center of the vehicle would cause an inappropriate handling of the steering wheel by the driver, so that the vehicle traveling would become more unstable.

According to the above-described embodiment of the present invention, although the upper-half bodies or upper portions of the occupants seated in the plural seats are moved substantially toward the center of the vehicle by changing positions or forms of the plural seats including the driver's seat when the vehicle side crash or rollover is predicted or detected by the determining device, the changing degree of the position or form of the driver's seat preferably is smaller than that of the seat other than the driver's seat, or the position or form of the driver's seat is substantially not changed. Thus, the movement of the upper portion or half of the driver's body substantially toward the center of the vehicle preferably is reduced or suppressed, so the vehicle traveling can be prevented from becoming more unstable.

According to another embodiment of the present invention, the moving device is configured so as to lower an inboard portion of buttocks of the occupant or raise an outboard portion of buttocks of the occupant when the vehicle rollover is predicted or detected by the determining device and the vehicle travels with wheels located at either one side of vehicle contacting a ground surface.

Herein, if the upper portion or half of the driver leans toward the center of the vehicle by lowering the inboard portion of driver's buttocks or raising the outboard portion of driver's buttocks when the vehicle travels with wheels located at either one side of vehicle contacting the ground surface, the steering wheel that the driver grips would be steered improperly toward the vehicle side of the wheels that do not contact on the ground surface. As a result, the vehicle rollover would be promoted.

According to the above-described embodiment of the present invention, although the inboard portion of driver's buttocks is lowered or the outboard portion of driver's buttocks is raised by changing positions or forms of the plural seats including the driver's seat when the vehicle side crash or rollover is predicted or detected by the determining device and the vehicle travels with wheels located at either one side of vehicle contacting the ground surface, the changing degree of the position or form of the driver's seat is smaller than that of the seat other than the driver's seat, or the position or form of the driver's seat is not changed. Thus, the leaning of the upper portion or half of the driver's body toward the center of the vehicle is suppressed, so the vehicle rollover can be prevented properly.

According to another embodiment of the present invention, the determining device is configured so as to predict or detect the vehicle rollover, the moving device is configured so as to move the upper portion or half of body of the occupant substantially toward the center of the vehicle when the vehicle rollover is predicted or detected by the determining device, and the changing degree of the position or form of the driver's seat is configured so as to be smaller than that of the seat other than the driver's seat when the vehicle rollover is predicted and to be substantially the same as that of the seat other than the driver's seat after the vehicle rollover is predicted and when the vehicle rollover is detected by the determining device.

Accordingly, since the changing degree of the position or form of the driver's seat is configured so as to be smaller than that of the seat other than the driver's seat when the vehicle rollover is predicted and to be substantially the same as that of the seat other than the driver's seat after the vehicle rollover is predicted and when the vehicle rollover is detected by the determining device, the changing degree of the position or form of the driver's seat is kept smaller than that of the seat other than the driver's seat until the vehicle rollover is detected by the determining device. Thereby, the driver can conduct any necessary driving operations to avoid the vehicle rollover until it becomes certain that the vehicle rollover occurs. Herein, in changing the position or form of the plural seats when the vehicle rollover is predicted and then the vehicle rollover is detected, all seats may be changed in their positions or forms or only the driver's seat may be changed in its position or form.

Also, since the changing degree of the position or form of the driver's seat is configured so as to be substantially the same as that of the seat other than the driver's seat after the vehicle rollover is predicted and when the vehicle rollover is detected by the determining device, the driver can be protected surely when it is certain that the vehicle rollover occurs.

According to the invention, there is further provided an occupant protection method for a vehicle, in particular using a occupant protection device for a vehicle according to the present invention or to a preferred embodiment thereof, comprising the following steps:
predicting and/or detecting a vehicle side crash or rollover; and
moving a head of an occupant seated in a seat substantially toward a center of the vehicle, preferably substantially without a rise in a position of the occupant's head, by means of a moving device when the vehicle side crash or rollover is predicted or detected.

Other features, aspects, and advantages of the present invention will become apparent from the following description which refers to the accompanying drawings. It should be understood that even though embodiments are separately described, single features thereof may be combined to additional embodiments.

FIG. **1** is a perspective view showing a normal state around an assistant's seat of a vehicle equipped with an occupant protection device for a vehicle according to an embodiment **1** of the present invention.

FIG. **2** is an elevation view showing the normal state around the assistant's seat.

FIG. **3** is a side view showing the normal state around the assistant's seat.

FIG. **4** is an elevation view of a first slide portion.

FIG. **5A** is a schematic side view showing a normal state of the first slide portion, and FIG. **5B** is a schematic side view showing a state of the first slide portion in which a vehicle side crash or rollover is predicted.

FIG. **6** is a side view showing a state around the assistant's seat in which the vehicle side crash or rollover is detected.

FIG. **7** is an elevation view showing a state around the assistant's seat in which the vehicle side crash or rollover is detected.

FIG. **8** is an elevation view showing a normal state around a driver's seat. FIG. **9** is a side view showing the normal state around the driver's seat.

FIG. **10** is a schematic constitution diagram of the occupant protection device for a vehicle.

FIG. **11** is a flowchart showing a control by a controller of the occupant protection device for a vehicle.

FIG. **12** is a diagram showing a state of the vehicle traveling with wheels located at either one side of vehicle contacting a ground surface.

FIG. **13** is a perspective view showing a normal state around the assistant's seat of the vehicle equipped with the occupant protection device for a vehicle according to another embodiment 3 of the present invention.

FIG. **14** is a schematic elevation view of a seat cushion support member in a normal state and in a state in which the vehicle side crash or rollover is predicted.

FIG. **15** is an elevation view showing a normal state around the assistant's seat of the vehicle equipped with the occupant protection device for a vehicle according to another embodiment 4 of the present invention.

FIG. **16** is an elevation view showing the normal state of a seat mount.

FIG. **17** is an elevation view showing a state around the assistant's seat in which the vehicle side crash or rollover is detected.

FIG. **18** is an elevation view showing a state of the seat mount in which the vehicle side crash or rollover is predicted.

Hereinafter, preferred embodiments of the present invention will be described referring to the accompanying drawings.

### EMBODIMENT 1

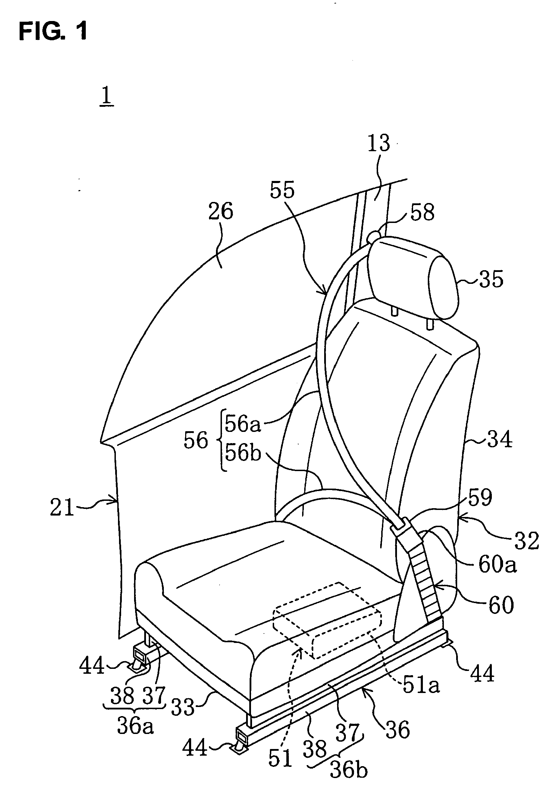

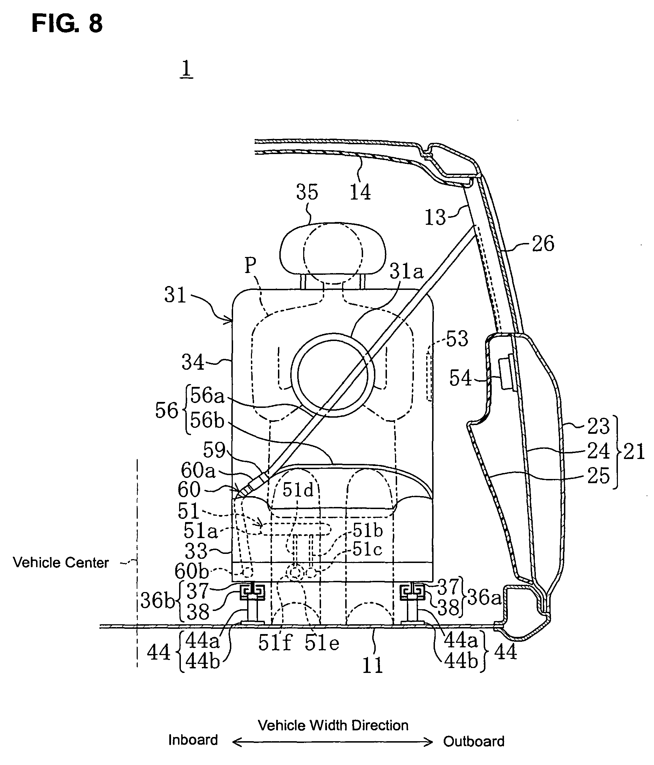

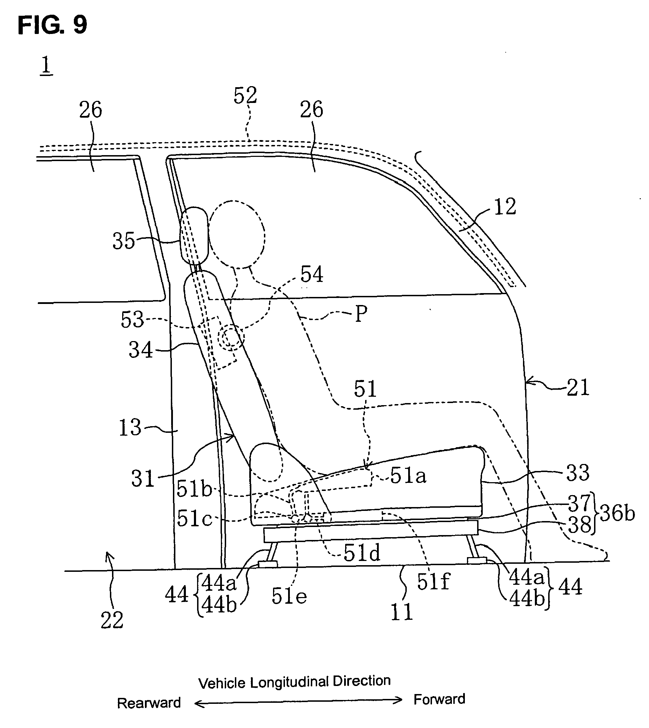

A vehicle **1** equipped with an occupant protection device for a vehicle **50** according to a preferred embodiment (embodiment 1) of the present invention comprises a vehicle body, side doors and seats. As shown in FIGS. **1** through **3,** the vehicle body includes a floor panel **11,** a pair of front pillars **12,** preferably a pair of center pillars **13,** a pair of rear pillars (not illustrated), and a roof **14.** The side doors include a pair of front doors **21** and preferably a pair of rear doors **22.** The doors **21, 22** include respectively outer panels **23,** inner panels **24** located inside the outer panels **23,** door trims **25** located inside the inner panels **24,** and window panes **26** covering window opening of the doors **21, 22.** The seats include a front seat comprising a driver's seat **31** (see FIGS. **8** and **9)** and an assistant's seat **32,** which are disposed substantially side by side on the floor panel **11,** and a rear seat (not illustrated) disposed behind the front seat.

Hereinafter, the assistant's seat **32** will be described. Other seats, especially the driver's seat has the similar or substantially the same structure as the assistant's seat **32.**

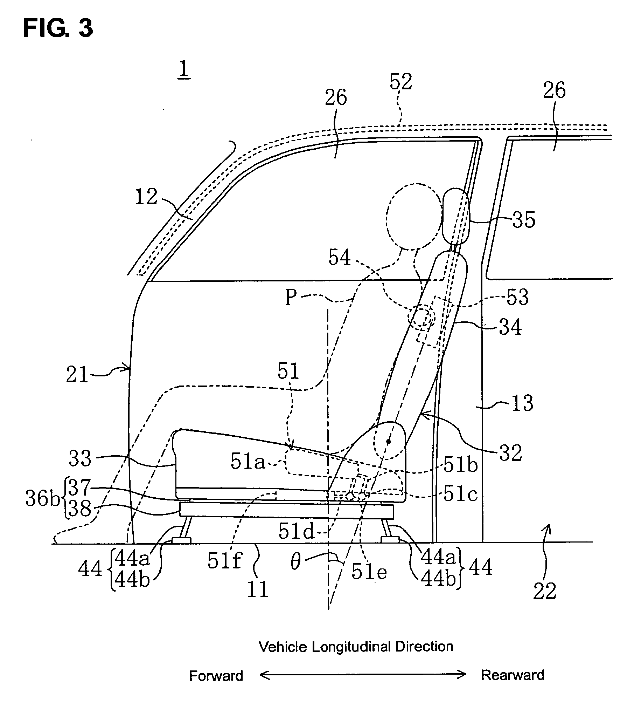

The assistant's seat **32** has a seat cushion **33,** a seat back **34,** and a headrest **35.** The seat back **34** is attached to a rear end of the seat cushion **33** so as to change its standing angle relative to the upper face of the seat cushion **33.** In the present embodiment, the rearward-inclined angle θ of the seat back **34** in the normal state (for example, a driving state by the driver) relative to the vertical direction preferably is set at about 15 through about 25 degrees (see FIG. 3). Herein, an angle changing mechanism **62,** which will be described below, is not operated when the seat position is changed with the vehicle side crash or rollover. Namely, the rearward-inclined angle θ is not changed when the seat position is changed. Thereby, an occupant **P** seated in the assistant's seat **32** may be prevented from feeling uncomfortable at the vehicle rear-slant crash. The headrest **35** is attached to an upper end of the seat back **34.**

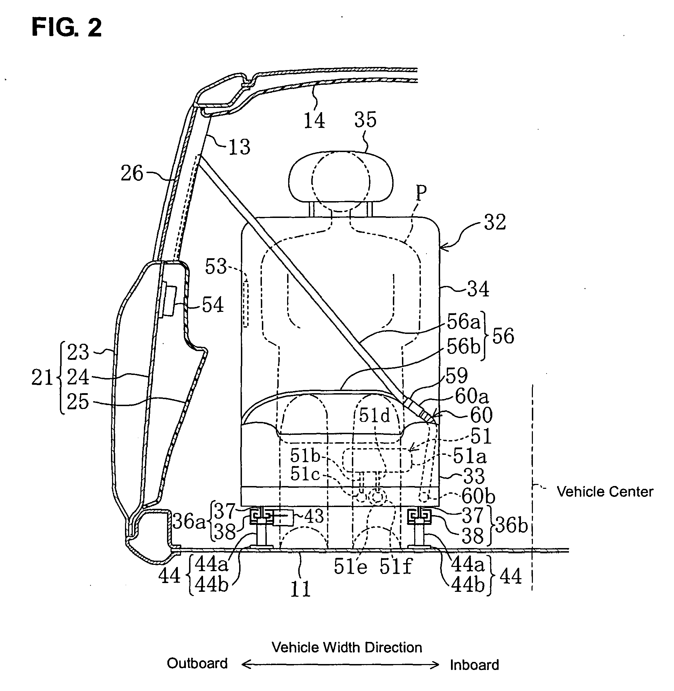

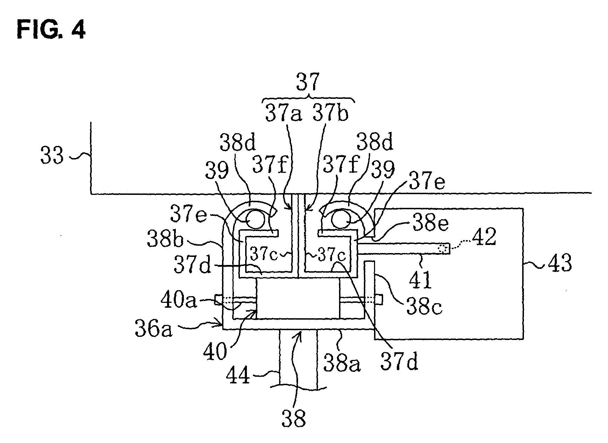

The assistant's seat **32** is equipped with a seat slide mechanism **36,** the angle changing mechanism **62,** and one or more seat mounts **44.** The seat slide mechanism **36,** which can move the assistant's seat **32** substantially in a longitudinal direction of the vehicle **1,** comprises first and second slide portions **36a, 36b** that are disposed at both or close to sides of a lower face of the seat cushion **33** of the assistant's seat **32.** As illustrated in FIGS. **1** through **5,** the first slide portion **36a** is located at an outboard end of the lower face of the seat cushion **33** (at a side of the front door **21,** on the left side in FIG. **2),** and includes an upper slider portion **37,** a lower guide portion 38, one or more ball members **39,** a roller **40,** a parallel bar **41,** and a link bar **42** (see FIG. **4).** The second slide portion **36b** is located at an inboard end of the lower face of the seat cushion **33** (on the right side in FIG. **2),** and includes an upper slider portion **37,** a lower guide portion **38,** one or more ball members **39,** and a roller **40.**

Hereinafter, the first slide portion **36a** will be described. Herein, the second slide portion 36b has a similar or substantially the same structure as that of the first slide portion **36a** except the parallel bar **41** and the link bar **42.** The upper slider portion **37** is fixed to the lower face of the seat cushion **33,** extending substantially in the vehicle longitudinal direction, and engaged with the lower guide portion **38.** The upper slider portion **37** is formed preferably with a T-shaped cross section (see FIG. **4),** and comprises a first and second plate members **37a, 37b** that are placed substantially side by side. The plate members **37a, 37b** include first side wall portions **37c,** first (lower) wall portions **37d,** second (side) wall portions **37e,** and third (upper) wall portions **37f.** The first slide portion **37c** is to be attached to the lower face of the seat cushion **33.** The upper slider portion **37** can slide on the lower guide portion **38** substantially in the vehicle longitudinal direction with the ball members **39** and the roller **40** as bearing.

The lower guide member **38** is to be fixed on the upper face of the floor panel **11** via the seat mount **44,** extending substantially in the vehicle longitudinal direction. The lower guide portion **38** is formed preferably with a substantially U-shaped cross section (see FIG. **4),** and comprises a lower wall portion **38a,** first and second side wall portions **38b, 38c,** and a pair of upper wall portions **38d.** The second side wall portion **38c** has a slot **38e** extending substantially in the longitudinal direction. The both upper wall portions **38d** are formed to project upward and/or inward in a curved shape.

The ball portions **39** are located respectively between the upper wall portions **37f** of the plate members **37a, 37b** of the upper slider portion **37** and the upper wall portions **38d** of the lower guide portion **38.** The roller **40** is disposed at least partly between the lower wall portions **37d** of the plate members **37a, 37b** of the upper slider portion **37** and the lower wall portions **38a** of the lower guide portion **38** in such a manner that a roller's central axis **40a** preferably extends substantially in a vehicle width direction. Both ends of the central axis **40a** of the roller **40** are to be fixed respectively to lower ends of the side wall portions **38b, 38c** of the lower guide portion **38.** Herein, the roller **40** disposed between the upper slider portion **37** and the lower guide **38** may need to be located at least at or near both ends in the vehicle longitudinal direction.

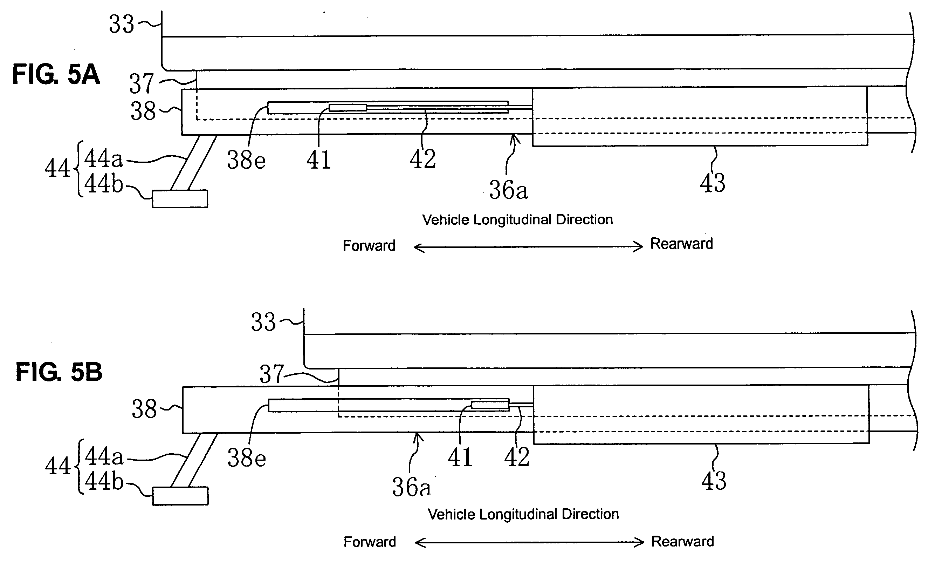

The parallel bar **41** is attached to an inboard face of the second side wall portion **37e** of the second plate member **37b** of the upper slider portion **37,** going through the slot **38e** of the lower guide portion **38,** so as to extend substantially in the vehicle width direction. The parallel bar **41** is located between the front end and the rear end of the slot **38e** of the lower guide portion **38** in the normal state (see FIG. **5A),** while it is located at or near or shifted toward substantially the rear end of the slot **38e** (see FIG. **5B)** when the vehicle side crash or rollover is predicted or detected by a controller **90** that will be described below. The link bar **42,** which extends rearward from the parallel bar **41,** is connected to a slide tensioner that will be described below.

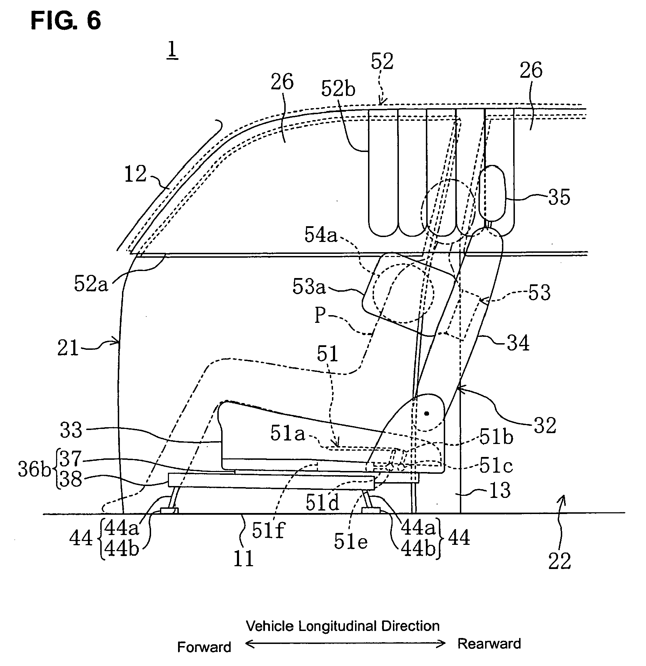

To an inboard face of the second side wall portion **38c** of the lower guide portion **38** is attached the slide tensioner **43.** The slide tensioner **43** is disposed in back of the slot **38e** of the lower guide portion **38,** and operates (drives or controls) the seat slide mechanism **36** when the vehicle side crash or rollover is predicted or detected by the controller **90.** Thereby, the link bar **42** is pulled rearward (namely, the link bar **42** is at least partly withdrawn into the slide tensioner **43),** and the parallel bar **41** contacts the rear end of the slot **38e** of the lower guide portion **38** (see FIG. **5B).** Accordingly, the upper slider portion **37** slides on the lower guide portion **38** substantially in the longitudinal direction, so the assistant's seat **32** position is changed substantially rearward as shown in FIG. **6.** Specifically, the position of a front end of the headrest **35** is changed within a scope from the intermediate or central position of or near the center pillar **13** to an offset position (preferably about a 10-cm-r.eac position) from the central position. Accordingly, the head of the occupant **P** seated in the assistant's seat **32** (namely, a portion right before the headrest **35** of the assistant's seat **32)** is moved to a specified (predetermined or predeterminable) position near the center pillar **13.** As a result, most part of the head of the occupant **P** is hidden or protected by the center pillar **13** when viewed from the side. At the same time, the outboard portion of the upper portion or half of the occupant **P** (specifically, the occupant's chest) is located so as to be at least partly opposed or corresponding to a pressing airbag **54a** in the folded state (namely, a pressing airbag unit **54** in pre-operation state). Herein, at the first slide portion **36a** of the driver's seat **31** preferably is provided the parallel bar **41,** the link bar **42** and the slide tensioner **43** (see FIG. **8).** Namely, the position of the driver's seat **31** is not changed when the vehicle side crash and rollover is detected or predicted by the controller **90.** This is because if the position of the driver's seat **31** is changed, the driver may be prevented from maneuvering the vehicle properly. The first slide portion **36a** has been described. Herein, the seat slide mechanism **36** may be operated (e.g. manually) by the occupant **P,** which will not described in detail here.

The above-described angle changing mechanism **62** changes the angle of the seat back **34** relative to the seat cushion **33,** i.e., the rearward-inclined angle θ of the seat back **34** relative to the vertical direction.

The above-described seat mounts **44** support to the assistant's seat **32** on the floor panel **11.** The seat mounts **44** are provided at front and rear ends of the lower face of the lower wall portions **38a** of the lower guide portions **38** of the both slide portions **36a, 36b,** and comprise one or more shaft members **44a** and bottom plates **44b,** respectively. The shaft members **44a** are to be fixed to the bottom plates **44b,** extending substantially in the vertical direction. The bottom plates **44b** are to be fixed to the floor panel **11.** Herein, the seat mounts **44** of the second slide portion **36b** are to be located below the inboard portion (specifically, an end portion) of the assistant's seat **32** so as to support the inboard portion of the assistant's seat **32** and an inboard portion (portion on the right in FIG. **2)** of buttocks of the occupant **P** seated in the assistant's seat **32.** The assistant's seat **32** is formed as described above.

Hereinafter, the occupant protection device for a vehicle **50** will be described referring to FIGS. **1** through **3** and **6** through **10.** Although the description will be about the assistant's seat 32 mainly, other seats, especially the driver's seat **31,** may have a similar or substantially the same structure as that of the assistant's seat **32.**

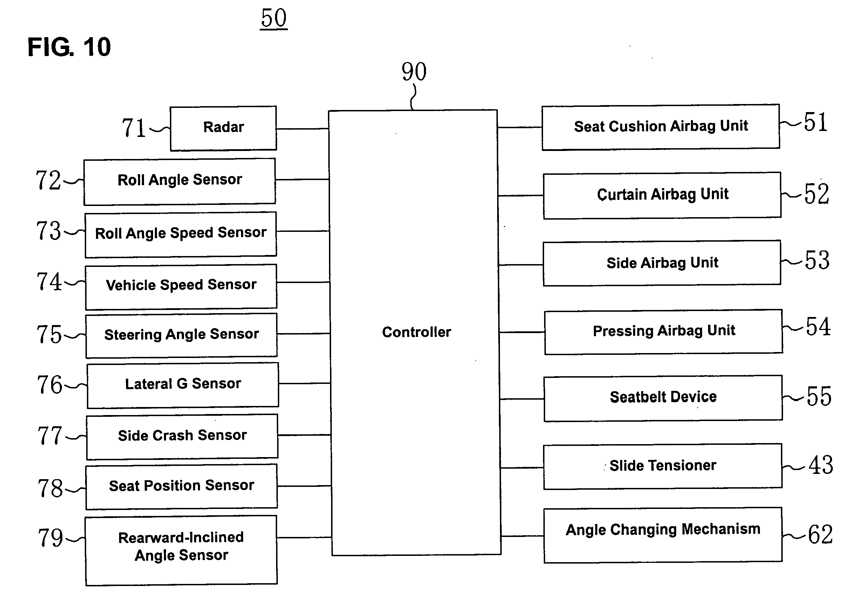

The occupant protection device for a vehicle **50** comprises, as illustrated in FIG. **10,** a seat cushion airbag unit **51** (moving device), a curtain airbag unit **52,** a side airbag unit **53,** a pressing airbag unit **54,** a three-point seatbelt device **55,** the sliding tensioner **43,** the angle changing mechanism **62,** one or more sensors, and/or the controller **90** (determining device).

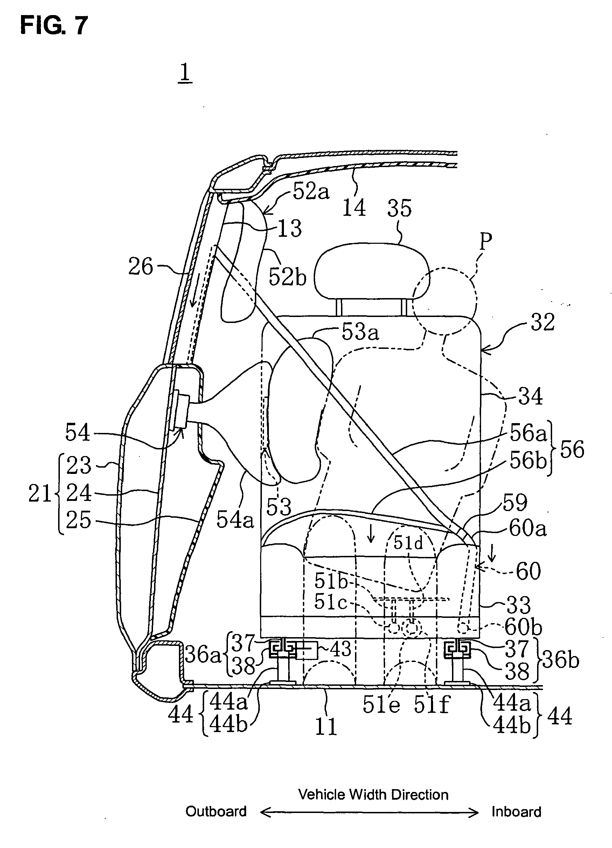

The seat cushion airbag unit **51** is provided at each seat as illustrated in FIGS. **1** through **3, 6** and **7.** Namely, the seat cushion airbag unit **51** is provided at least partly substantially above the upper slider portion **37** of the seat slide mechanism **36.** The seat cushion airbag unit **51** includes a seat cushion airbag **51a,** a gas releasing pipe **51 b,** a gas releasing valve **51 c,** a gas supply pipe **51 d,** a gas supply valve **51 e,** and/or a gas cylinder **51f.** The seat cushion airbag 51a is at least partly accommodated in (preferably the rear portion of) the seat cushion **33** to at least partly support the inboard portion (right-side portion in FIG. **2)** of buttocks of the occupant **P** seated in the seat. Namely, the seat cushion airbag **51a** is located below (preferably substantially right below) the inboard portion (portion towards a center of the vehicle substantially in widthwise direction) of the occupant's buttocks. The seat cushion airbag **51 a** is normally in an inflated state where it is filled with gas (see FIGS. **1** through 3). Accordingly, the upper face of the seat cushion airbag **51a** keeps a substantially flat face on the substantially same levels of its both sides in the normal state. Meanwhile, when the vehicle side crash or rollover is detected or predicted by the controller **90,** the gas is exhausted from the seat cushion airbag **51a,** so the seat cushion airbag **51a** is changed towards or to its shrunk or collapsed state with its vertical length reducing (namely, the highest point of the airbag becomes lower than that in the inflated state) (see FIGS. **6** and **7).** In this way, since the seat cushion airbag **51a** is changed from its inflated state towards or to its shrunk state when the vehicle side crash or rollover is predicted or detected by the controller **90,** the inboard portion of the rear part of the upper face of the seat cushion **33** is lowered by the weight of the occupant **P.** Thereby, the level of the inboard portion of the occupant's buttocks is lower than that of inboard portion (left-side portion in FIG. **7)** of the occupant's buttocks. As a result, the upper portion or half of the occupant's body is leaned toward the center of the vehicle **1** (inward in FIG. **10,** and thereby the upper portion or half of the occupant's body, i.e., the occupant's head is moved toward the center of the vehicle. At the same time, the head of the occupant is lowered because of the lean or slant of the occupant's upper body.

The gas releasing pipe **51 b** is a pipe to release (exhaust) the gas in the seat cushion airbag bag **51.** One end of the gas releasing pipe **51** b opens inside the seat cushion airbag **51** and the other of that opens outside that. The gas releasing valve **51 c** is disposed in the gas releasing pipe **51 b.** The gas releasing valve **51 c** is normally in a closed state, and it is tuned or turned towards or to its open state when the vehicle side crash or rollover is predicted by the controller **90.** Namely, when the vehicle side crash or rollover is predicted or detected by the controller **90,** the gas releasing valve **51 c** opens the gas releasing pipe **51 b** to at least partly release the gas in the seat cushion airbag **51a** e.g. to the outside, and the seat cushion airbag **51 a** becomes from its open state to its shrunk or collapsed state. Then, the gas releasing valve **51c** closes again after a specified (predetermined or predeterminable) time (e.g., about 5 seconds) has passed while no vehicle side crash or rollover is detected or predicted. Herein, the seat cushion airbag unit **51** is configured such that the seat cushion airbag **51a** is changed from the closed state towards or to the shrunk state preferably within about 3 seconds, preferably 1.6 seconds (as a preferred short specified time). In the present embodiment, the above-scribed time is set at about 1 second.

The gas supply pipe **51d** supplies the gas in the gas cylinder **51f** into the seat cushion airbag **51.** One end of the gas supply pipe **51d** opens inside the seat cushion airbag **51** and the other of that is coupled to the gas cylinder **51f.** The gas supply valve **51e** is disposed in the gas supply pipe **51d.** The gas supply valve **51e** is normally in a closed state, and it is tuned to its open state when a specified (predetermined or predeterminable) time (e.g., about 5 seconds) has passed while no vehicle side crash or rollover is detected or predicted or confirmed by the controller 90 after the gas releasing valve **51** c opens (namely, after the vehicle side crash or rollover is predicted or detected by the controller **90).** Then, after a specified (predetermined or predeterminable) time has passed, it returns to its closed state again. Thereby, the gas in the gas cylinder **51f** is supplied to the seat cushion airbag **51a** via the gas supply pipe **51d** and the seat cushion airbag **51a** is retuned from the shrunk state towards or to the inflated state. The gas cylinder **51f** is a container for the gas to be supplied to the seat cushion airbag **51 a.**

Herein, as illustrated in FIGS. **8** and **9,** although the location of the seat cushion airbag **51a** in the driver's seat **31** is almost similar to the one in the other seats, the vertical length of the driver's seat with the seat cushion airbag **51a** in the inflated state (normal state) preferably is shorter than that of the other seats with the seat cushion airbag **51a** in the inflated state. Namely, the inflated volume of the seat cushion airbag **51a** of the driver's seat **31** is smaller than that of the other seats. In other words, the seat cushion airbag **51a** of the driver's seat **31** preferably is smaller than that of the other seats. Thereby, when vehicle side crash or rollover is predicted or detected by the controller **90,** the lowered change of the inboard portion of the upper face of the seat cushion **33** of the driver's seat **31** preferably is smaller than that of the other seats. Namely, a changing degree of position or form of the driver's seat **31** is smaller (at least partly suppressed) than that of other seats when vehicle side crash or rollover is detected or predicted (preferably only in case it is detected) by the controller **90.** Herein, the changing degree of the position or form of the seats means a degree of changing in position or form of the seats from the normal state. Accordingly, the lowered change of the inboard portion of the buttocks of the driver preferably becomes smaller than that of the occupants seated in other seats. This means that the upper portion or half body of the driver substantially does lean toward the center of the vehicle not so much as that of the occupants in the seats other than the driver's seat. As a result, the movement of the driver's upper portion or half body, i.e., the driver's head toward the center of the vehicle becomes smaller that of the other occupants upper portion or half bodies, particularly, the other occupants heads.

The above-described curtain airbag unit **52** at least partly is provided substantially along each front pillar **12** and side end of a roof **14,** and comprises a curtain airbag **52a** and an inflator (not illustrated) as illustrated in FIGS. **3, 6** and **7.** The curtain airbag **52a** is normally at least partly accommodated in the curtain airbag unit **52** in a folded or non-inflated state. When the vehicle side crash or rollover is detected or predicted by the controller **90,** the curtain airbag **52a** is inflated to at least partly cover inside faces of the window panes **26** of the front door **12** and/or rear door **22** (namely, the side window panes or upper portions of the doors **21, 22)** (see FIGS. **6** and **7).** The curtain airbag **52a** located at the assistant seat **32** includes one or more, preferably a plurality of inflation portions **52b** (e.g. five portions in the present embodiment) that are inflated in substantially cylindrical shape to preferably substantially cover only upper part of the center pillar **13.** Herein, the inflation portions **52b** mean portions that have a thickness or widthwise extension (a length in the vehicle width direction) of about 5 cm or more in their inflated state. In the present embodiment, the inflation portions **52b** are configured so as to have the thickness of about 15 cm when they are inflated. Also, it is preferable that the inflation portions **52b** are inflated so as to at least partly cover an area preferably from a portion about 40 cm before the front edge of the center pillar **13** to a portion about 40 cm behind the front edge of the center pillar **13.** In the present embodiment, they are configured so as to at least partly cover the area from the about 40 cm before the front edge of the center pillar **13** to an about 20 cm behind the front edge of the center pillar **13.** Herein, since the occupant's head of the assistant's seat **32** is moved toward the center of the vehicle when the vehicle side crash or rollover is predicted or detected by the controller **90** in the present embodiment, the upper portion or half body of the occupant **P** in the assistant's seat 32 moves away from the center pillar **13.** Thereby, the inflation portions **52b** can be configured to have the greater thickness in the inflation state. The curtain airbag **52a** located at the driver's seat **31** also has the inflation portions **52b.** Herein, as described above, the driver's seat **31** position preferably is not changed when the vehicle side crash or rollover is predicted by the controller **90.** Accordingly, it is preferable that the inflation portions **52b** of the curtain airbag **52a** at the driver's seat **31** is configured so as to cover a wider area than the inflation portions **52b** of the curtain airbag **52a** at the assistant's seat **32** in order to protect the driver properly. The above-described inflator operates to inflate the curtain airbag **52a** according to the detection of the vehicle side crash or rollover by the controller **90.**

The side airbag unit **53** is provided in an outside end or lateral portion of the seat back **34** of preferably each seat, and comprises a side airbag **53a** and an inflator (nor illustrated), as illustrated in FIGS. **2, 3, 6** and **7.** The side airbag **53a** is normally stored in the side airbag unit **53** in a folded or non-inflated state. When the vehicle side crash or rollover is detected or predicted by the controller **90,** the side airbag **53a** is inflated between the occupant **P** and the doors **21, 22** to at least partly cover an outboard portion (door-side portion) of the upper portion or half of the occupant's body (see FIGS. **6** and **7).** The inflator operates to inflate the side airbag **53a** preferably according to the detection of the vehicle side crash or rollover by the controller **90.**

As illustrated in FIGS. **2, 3, 6** and **7,** preferably the above-described pressing airbag unit **54** is provided at or near a rear portion (at a rear end portion of the front door **21** of the assistant's seat **32)** of an inside face of each inner panel **24** of the doors **21, 22,** which is located preferably at substantially the same level as the chest of the occupant **P.** The pressing airbag unit **54** includes a pressing airbag **54a** and an inflator (not illustrated). The pressing airbag **54a** is normally stored in the pressing airbag unit **54** in a folded or non-inflated state. When the vehicle side crash or rollover is detected by the controller **90** (namely, preferably at the same time when the side airbag **53a** operates), the pressing airbag **54a** is inflated inward to push inward the side airbag **53a** that is under inflation or inflated (see FIGS. **6** and **7).** Thereby, the chest of the occupant **P** is pushed inward via the side airbag **53a** by the pressing airbag **54a** when the vehicle side crash or rollover is detected by the controller **90.** As a result, the movement of the occupant's head toward the center of the vehicle by the seat cushion airbag unit **51** is advantageously promoted. The inflator operates to inflate the pressing airbag **54a** according to the detection of the vehicle side crash or rollover by the controller **90.**

The above-described seatbelt device **55** comprises, as illustrated in FIGS. **1, 3** and **7,** is provided at each seat, and comprises a seatbelt (webbing) **56,** a retractor (not illustrated), a shoulder anchor **58,** preferably a tongue **59,** and a buckle portion **60.** The seatbelt **56** restrains the occupant **P** in the seat. The seatbelt **56** is wound up at its one end and attached to the outboard end of the seat cushion **33** in a state where it goes through the shoulder anchor **58** and the tongue **59.** The seatbelt **56** includes a shoulder belt portion **56a** that is to restrain a higher part or the upper portion or half of the occupant's body in the seat back **34** (downward) and a lap belt portion **56b** that is to restrain a lower part or the lower half of the occupant's body in the seat cushion **33** (rearward).

The retractor is attached to a lower portion of the center pillar **13,** and preferably comprises a shoulder pre-tensioner that operates when the vehicle side crash or rollover is predicted or detected by the controller **90** (with the open operation of the gas releasing valve **51c).** Thus, the retractor winds up the shoulder seatbelt portion **56a** to apply the tension to the seatbelt **56.** As a result, the upper portion or upper portion or half of the occupant's body is restraint (preferably rearwardly pulled) in the seat back **34** by the shoulder belt portion **56a.**

The shoulder anchor **58** is attached to an upper portion of the center pillar **13.** The tongue **59** is operative to be at least partly inserted into a buckle hole **60a** of the buckle portion **60.** The tongue **59** engages with the buckle **60a**, thereby restraining the occupant **P** in the seat with the seatbelt **56.**

The buckle portion **60** is to be attached preferably to the inboard end portion of the seat cushion **33.** Namely, the outboard end of the seatbelt device **55** (the end located at the center side of the vehicle) is to be fixed to the inboard end portion of the seat. The buckle portion **60** preferably includes a buckle **60a** and a pre-tesnioner **60b.** The buckle **60a** is coupled to a lap pre-tensioner **60b.** The lap pre-tensioner **60b** operates when the vehicle side crash or rollover is predicted by the controller **90** (with the open operation of the gas releasing valve **51 c)** so as to pull preferably substantially down the buckle **60a** (namely, the inboard end of the lap belt portion **56b).** Thereby, the tension is applied to the seatbelt **56,** thereby restraining the lower portion or half of the occupant's body in the seat cushion **33** by the lap belt portion **56b.** Thus, since the buckle **60a** is pulled downward when the vehicle side crash or rollover is predicted by the controller **90,** the lower portion or lower half of the occupant's body is pulled down. As a result, the movement of the occupant's head toward the center of the vehicle by the shoulder airbag unit **51** is advantageously promoted.

The one or more sensors comprise, as illustrated in FIG. **10,** a radar **71,** a roll angle sensor **72,** a roll angle-speed sensor **73,** a vehicle speed sensor **74,** a steering angle sensor **75,** a lateral G sensor **76,** a side crash sensor **77,** a seat position sensor **78,** a rearward-inclined angle sensor **79** and/or yaw sensor (not shown). The radar **71** detects a distance between the vehicle **1** and an object located near the vehicle. The roll angle sensor **72** detects a roll angle (rollover angle). The roll angle-speed sensor **73** detects a roll angle-speed. The vehicle speed sensor **74** detects a speed of the vehicle 1. The steering angle sensor **75** detects a steering angle of a steering wheel **31a** (see FIG. **8).** The lateral G sensor **76** detects an acceleration acting the vehicle in a lateral direction (the vehicle width direction). The side crash sensor **77,** which is provided at a lower portion of the center pillar **13,** detects an impact caused by the side crash of the vehicle **1.** The seat position sensor **78** detects a position of each seat in the vehicle longitudinal direction. The rearward-inclined angle sensor **79** detects a rearward-inclined angle θ of the seat back **34** of each seat relative to the vertical direction. The yaw sensor detects a yaw angle about a substantially vertical axis of the vehicle **1.**

The controller **90** predicts or detects the side crash or rollover of the vehicle **1** based on the detection data from the one or more sensors **(71** through **79),** and controls the seat cushion airbag unit **51** and the like as described above when that is predicted and/or detected. Herein, when the vehicle rollover is predicted by the controller **90,** the vehicle may travel with wheels located at either one side of vehicle contacting the ground surface or travel with all wheels contacting the ground surface. Both situations of the vehicle traveling may be possible.

### - Control of the occupant protection device by the controller -

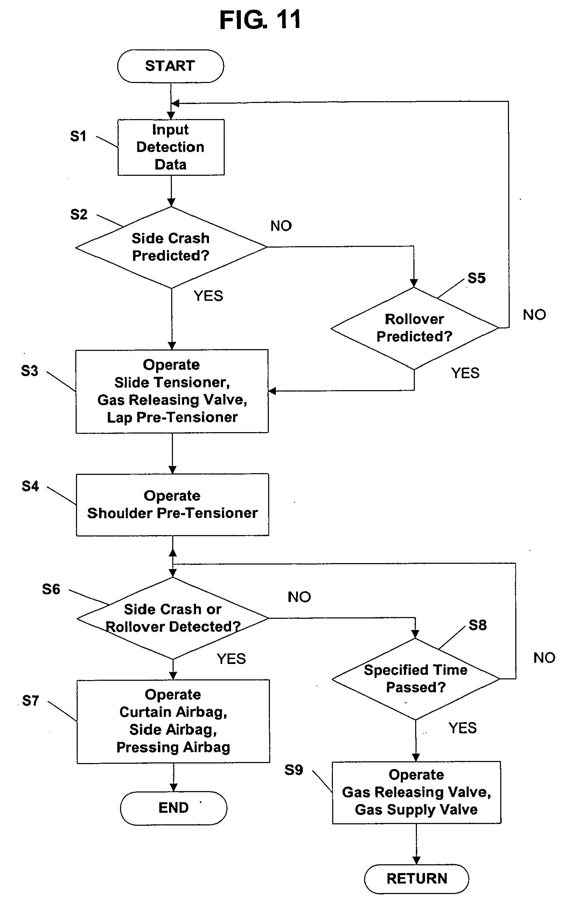

Hereinafter, the control of the occupant protection device by the controller **90** will be described referring to a flowchart shown in FIG. **11.**

Detection data from the one or more sensors **(71** - **79)** are inputted in step **S1.** In step **S2,** it is determined whether the side crash of the vehicle **1** is predicted or not based on the detection data from the sensors **71** - **79.** Specifically, it is determined whether or not the vehicle will have the side crash in a while, i.e., about 1 to 3 seconds, more preferably in about 1 to 2 seconds. Herein, for example, the radar **71** or a camera detecting an obstacle object beside the vehicle detects the obstacle object existing beside the vehicle **1,** the distance between the vehicle **1** and the obstacle object, a changing rate of this distance, etc. And, when it is detected that the obstacle object exists beside the vehicle **1,** the distance is closer than a specified (predetermined or predeterminable) distance, and an approaching speed, i.e., the changing rate of the distance, is more than a specified (predetermined or predeterminable) value, it is determined that the side crash of the vehicle has been predicted.

When the determination in the step **S2** is YES, the control sequence proceeds to step **S3,** where the seat slide tensioner **43,** the gas releasing valve **51c** of the seat cushion airbag unit **51,** and the lap pre-tensioner **60b** of the seatbelt device **55** are operated preferably at the substantially same time.

Then, the slide tensioner **43** operates to change the seat position, so the occupant's head is moved to a specified (predetermined or predeterminable) position near the pillar **13** (see FIG. **6).** Also, the gas releasing valve **51c** operates to change the state of the seat cushion airbag **51a** from its inflated state towards or to its shrunk state, so the occupant's head is moved substantially toward the center of the vehicle **1** (see FIG. **7).** Further, the lap pre-tensioner **60b** operates to make the lap belt portion **56b** restrain the lower portion or half of the occupant body in the seat cushion **33,** so the movement of the occupant's head substantially toward the center of the vehicle is promoted.

In step **S4,** the shoulder pre-tensioner of the seatbelt device **55** is operated. Thereby, the shoulder belt portion **56a** retrains the upper portion or half of the occupant's body in the seat back **34.** There preferably exists a time lag or delay between the step **S3** and the step **S4.** Namely, the timing of the restraint of the lower portion or half of the occupant's body in the seat cushion **33** preferably is set to be earlier than that of the upper portion or half of the occupant's body in the seat back **34.**

When the determination in the step **S2** is NO, the control sequence proceeds to step **S5,** where it is determined based on the detection data from the sensors **71** - **79** whether the vehicle rollover is predicted or not (namely, whether or not the vehicle is about to be rolled over). Specifically, preferably when the roll angle is a first (predetermined or predeterminable) angle or more and the roll angle speed is a first (predetermined or predeterminable) speed or more, the vehicle speed is a specified (predetermined or predeterminable) speed or more and/or at least one of the steering angle and the changing rate of the steering angle is a specified (predetermined or predeterminable) value or more, the lateral G is a specified (predetermined or predeterminable) value or more, or the yaw rate of the vehicle 1 is specified (predetermined or predeterminable) or more, it is determined that the vehicle rollover has been predicted. Herein, it may be determined based on the vehicle speed, steering angle, and/or the changing rate of the steering angle that the vehicle rollover has been predicted due to the vehicle turning.

When the determination in the step **S5** is YES, the control sequence proceeds to the step **S3,** while when the determination is NO, the control sequence returns to the step **S1.**

In step **S6,** it is determined based on the detection data from the one or more sensors **71** - **79** whether the vehicle side crash or rollover is detected or not (namely, whether the side crash of the vehicle 1 is detected or not, or whether the rollover of the vehicle 1 is substantially certain .or not). Specifically, preferably when a crash acceleration is a specified (predetermined or predeterminable) value or more (namely, the impact is a specified (predetermined or predeterminable) value or more), it is determined the vehicle side crash has been detected. Also, when the roll angle is a second (predetermined or predeterminable) angle or more and the roll angle speed is a second (predetermined or predeterminable) speed or more, preferably it is determined that the vehicle rollover has been detected. Herein, the second angle and the second speed preferably are greater than the first angle and the first speed, respectively. Also, when the vehicle rollover is predicted in the step S5 and just before the determination in the step **S6** that the vehicle rollover is substantially certain, the vehicle is under traveling with wheels located at either one side of vehicle contacting the ground surface, and the movement of the occupant's head toward the center of the vehicle is done (see the step **S3).**

When the determination in the step **S6** is YES, the control sequence proceeds to step **S7,** where the inflators of the curtain airbag unit **52,** the side airbag unit **53** and/or pressing airbag unit **54** are operated preferably at the substantially same time. Namely, after the operation of the seat cushion airbag unit **51** (after the shrinkage or collapsing operation starts), the curtain airbag **52a,** side airbag **53a** and pressing airbag **54a** are operated (inflation start) to be inflated preferably at the substantially same time. Thereby, the pressing airbag **54a** pushes the outboard portion of the occupant's chest inward via the side airbag **53a,** so the movement of the occupant's head substantially toward the center of the vehicle is promoted (see FIG. **7).** Herein, gas volume to inflate the pressing airbag **54a** corresponding to the driver's seat **31** (the driver **P)** preferably is smaller than that of the pressing airbags **54a** corresponding to the other seats (occupants **P** seated in the other seats). Or, a vent hole of the pressing airbag **54a** corresponding to the driver's seat **31** preferably is greater than that the pressing airbags **54a** corresponding to the other seats. Then, the control sequence proceeds to the end.

When the determination in the step S6 is NO, the control sequence proceeds to step **S8,** where it is determined whether or not a specified (predetermined or predeterminable) time of period has passed without detecting the vehicle side crash or rollover (namely, whether or not the vehicle crash or rollover has been avoided).

When the determination in the step **S8** is YES, the control sequence proceeds to step **S9,** where the gas releasing valve **51c** and the gas supply valve **51e** of the seat cushion airbag unit **51** are operated preferably at the substantially same time. Thereby, the seat cushion airbag **51 a** is returned from the shrunk state towards or to the inflated or expanded state, so the occupant **P** is returned towards or to the initial position. Then the control sequence returns to the start. Meanwhile, when the determination in the step **S8** is NO, the control sequence returns to the step **S6.**

Accordingly, according to the present embodiment, when the vehicle side crash or rollover is predicted or detected by the controller **90,** the seat cushion airbag **52a** is deformed and thereby the inboard or inner portion of the occupants' buttocks is lowered. Herein, the gravity (weights of the occupant and seat components) acting downward assists the inboard portion of the occupants' buttocks to be lowered, so this downward movement can be done in the relatively short time (promptly). Thus, the occupant's head can be moved promptly substantially toward the center of the vehicle.

Also, since the inboard portion of the occupants' buttocks is lowered, the occupant's head is moved substantially downward. As a result, the head of the occupant **P** can be properly prevented from hitting against the roof **14.**

Also, since the support portion (the seat cushion airbag **51a** of the present embodiment) is at least partly accommodated in the inboard portion of the seat cushion **33,** the support portion can be designed so as to support substantially only the occupant **P.** As a result, the structure of the support portion can be made simple.

Also, since the tension is applied to the seatbelt **56** by the lap pre-tensioner **60b** with the opening operation of the gas releasing valve **51 c** and thereby the lower portion or half of the occupant's body is restrained in the seat cushion **33** by the seat belt 56, the lower or portion half of the occupant's body is pulled or urged substantially downward. Thereby, by using the gravity and this downward pulling, the inboard portion of the occupants' buttocks can be lowered in the short time (more promptly). As a result, the occupant's head can be moved substantially toward the center of the vehicle and/or substantially lowered in the short time.

Herein, although the buckle portion **60** is to be attached to the inboard end of the seat cushion **33** of the seat in the present embodiment, it may be to be attached to the center of the upper face of the floor panel **11** (e.g. at a tunnel portion).

Accordingly, according to the present embodiment, since the occupant **P** is pushed substantially inward by the pressing airbag **54a** during or after the shrinkage or collapsing operation of the seat cushion airbag unit **51,** the movement of the occupant's head toward the center of the vehicle by the seat cushion airbag unit **51** is advantageously promoted. Thus, the occupant's head can be moved substantially toward the center of the vehicle in the relatively short time. Thus, the head of the occupant **P** can be prevented from hitting against the window pane **26** of the door **21,** the trim of the pillar **13** and/or the curtain airbag **52a.**

Also, since the outboard portion of the occupant's chest that is relatively hard is pushed by the pressing airbag **54a,** the movement of the occupant's head toward the center of the vehicle by the moving seat cushion airbag unit **51** can be further promoted.

Also, since the pressing airbag **54a** operates (starts its operation) after the operation of the moving seat cushion airbag unit **51** (operation start), the occupant **P** is not forced to take the rather uncomfortable position and thus the occupant **P** can be pushed inward surely by the pressing airbag **54a.**

Also, since the pressing device is configured of the airbag **54a,** the structure of the pressing device can be made simple.

Herein, since the airbag that has been inflated once may not return to its initial state without some particular operations, it is preferable that the inflation of the airbag is not carried out when the real vehicle side crash or rollover has been avoided.

According to the above-described embodiment, the pressing airbag **54a** is inflated substantially inward after the vehicle side crash or rollover is predicted and when the vehicle side crash or rollover is detected by the controller **90.** Namely, when the vehicle side crash or rollover preferably is not detected by the controller **90,** the pressing airbag **54a** is not inflated. Thus, the inflation of the pressing airbag **54a** preferably is prevented when the vehicle side crash or rollover has been avoided.

Generally, the side airbag **53a** is an airbag that is configured so as to be inflated widely.

According to the above-described embodiment, the pressing airbag **54a** pushes substantially inward the side airbag **53a** that is under inflation or inflated. Thereby, the pressing airbag **54a** can properly use the relatively large side airbag **53a,** so the relatively large area can be pushed substantially inward. Accordingly, the occupant **P** can be pushed substantially inward surely and properly regardless of the occupant's sitting position. As a result, the occupant's head can be moved surely substantially toward the center of the vehicle and/or substantially downward.

Also, since the pressing airbag **54a** pushes the outboard portion of the occupant P substantially inward preferably via the relatively large side airbag **53a** that is under inflation or inflated, the longitudinal-direction length and the vertical-direction length of the pressing airbag **54a** in the inflated state can be short.

Also, since the seat is moved by the seat slide mechanism **36** when the vehicle side crash or rollover is predicted or detected by the controller **90** such that the outboard portion of the occupant **P** is at least partly opposed to the pressing airbag **54a,** the occupant **P** can be surely moved substantially inward by the pressing device regardless of the seat's initial position. As a result, the occupant's head can be moved surely substantially toward the center of the vehicle.

Also, when the vehicle side crash or rollover is predicted or detected by the controller **90**, the inboard portion of buttocks of the occupant is lowered by the seat cushion airbag unit **51.** Herein, the outboard portion of the occupant's chest preferably may not be changed in height during the shrinkage operation of the seat cushion airbag unit **51** and after that operation. Thus, the outboard portion of the occupant's chest can be pushed surely by the pressing device.

According to the above-described embodiment, when the vehicle side crash or rollover is predicted by the controller **90,** the occupants' heads seated in the plural seats are moved substantially toward the center of the vehicle by changing positions and/or forms of the plural seats including the driver's seat **31** by the seat cushion airbag unit **51.** Herein, since the changing degree of the position and/or form of the driver's seat **31** is smaller than that of the seat other than the driver's seat **31,** the changing degree of the driver's position can be made relatively small. Thus, when the vehicle side crash is relatively small, the vehicle rollover is in the early stage, or the vehicle side crash or rollover is predicted, the driver can maneuver the vehicle properly to avoid the vehicle side crash or rollover.

Also, since the occupants' heads seated in the plural seats are moved substantially toward the center of the vehicle by changing positions and/or forms of the plural seats including the driver's seat when the vehicle side crash or rollover is predicted as described above, the protection performance of the occupant protection device **50** can be maintained on the high level.

Further, since the changing degree of the driver's position preferably is made relatively small as described above, a dangerous situation can be avoided in which the driver **P** would stop operations of a brake pedal or an accelerator and thereby the vehicle traveling would become unstable.

Herein, when the vehicle traveling is in an unstable state, such as a traveling situation where the vehicle **1** is about to be rolled over, receiving a relatively large lateral G acting on the vehicle **1** laterally, or where the vehicle **1** is rolled over, the movement of the upper portion or half of the occupant's body toward the center of the vehicle would cause an inappropriate handling of the steering wheel **31a** by the driver **P,** so that the vehicle traveling would become more unstable.

According to the above-described embodiment of the present invention, although the upper-half bodies (or upper body portions) of the occupants seated in the plural seats are moved substantially toward the center of the vehicle by changing positions and/or forms of the plural seats preferably including the driver's seat **31** by the seat cushion airbag unit **51** when the vehicle side crash or rollover is predicted (but preferably not yet detected) by the controller **90,** the changing degree of the position and/or form of the driver's seat **31** preferably is smaller than that of the seat other than the driver's seat **31,** or the position and/or form of the driver's seat is not changed. Thus, the movement of the upper portion or half of the driver's body toward the center of the vehicle **1** is suppressed, so the vehicle traveling can be prevented from becoming more unstable.

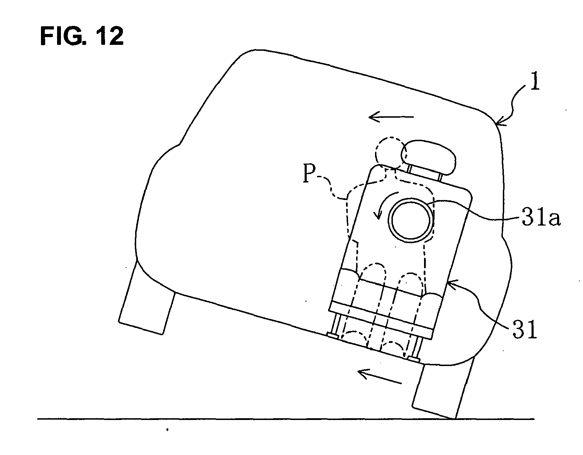

Herein, if the upper half or portion of the driver **P** leans toward the center of the vehicle by lowering the inboard portion of driver's buttocks and/or raising the outboard portion of driver's buttocks when the vehicle travels with wheels located at either one side of vehicle contacting the ground surface as illustrated in FIG. **12,** the steering wheel **31a** that the driver **P** grips would be steered improperly toward the vehicle side of the wheels that do not contact on the ground surface. As a result, the vehicle rollover would be promoted.

According to the above-described embodiment of the present invention, although the inboard portion of driver's buttocks is lowered and/or the outboard portion of driver's buttocks is raised by changing positions or forms of the plural seats including the driver's seat **31** by the seat cushion airbag unit **51** when the vehicle side crash or rollover is predicted by the controller **90** and the vehicle **1** travels with wheels located at either one side of vehicle contacting the ground surface, the changing degree of the position or form of the driver's seat **31** is smaller than that of the seat other than the driver's seat, or the position and/or form of the driver's seat is not changed. Thus, the leaning of the upper portion or half of the driver's body toward the center of the vehicle is suppressed, so the vehicle rollover can be prevented properly or its likeliness reduced.

Herein, although the changing degree of the position or form of the driver's seat **31** preferably is set be smaller than that of the seat other than the driver's seat **31** in the present embodiment, the following setting may also be applicable. Namely, when the vehicle rollover is predicted (including a situation where the vehicle **1** travels with wheels located at either one side of the vehicle contacting the ground surface) or detected by the controller **90,** the position and/or form of the seats including the driver's seat **31** is changed. And, the changing degree of the position and/or form of the driver's seat **31** preferably is configured or controlled so as to be smaller than that of the seat other than the driver's seat when the vehicle rollover is predicted by the controller **90** and/or to be preferably substantially the same as that of the seat other than the driver's seat after the vehicle rollover is predicted and/or when the vehicle rollover is detected by the controller **90.** In other words, when vehicle rollover is predicted by the controller **90,** the lowered change of the inboard portion of the upper face of the seat cushion **33** of the driver's seat **31** is smaller than that of the other seats. While, when the vehicle rollover is detected by the controller **90,** the lowered change of the inboard portion of the upper face of the seat cushion **33** of the driver's seat **31** preferably is substantially the same as that of the other seats. Herein, the changing degree of the position and/or form of the other seats when the vehicle rollover is detected by the controller **90,** is greater than or the substantially same as that thereof when the vehicle rollover is predicted by the controller **90.** Accordingly, until the vehicle rollover is detected by the controller **90,** the changing degree of the position and/or form of the driver's seat **31** preferably is smaller (preferably substantially suppressed) than that of the seat other than the driver's seat **31.** Thereby, the driver can conduct or is not impaired in any necessary driving operations to avoid the vehicle rollover until it becomes substantially certain or it is detected that the vehicle rollover occurs. Also, since the changing degree of the position or form of the driver's seat **31** preferably is substantially the same as that of the seat other than the driver's seat after the vehicle rollover is predicted and when the vehicle rollover is detected by the controller **90,** the driver can be protected surely after it becomes certain that the vehicle rollover occurs. Herein, in changing the positions and/or forms of the plural seats when the vehicle rollover is predicted and then the vehicle rollover is detected, all seats may be changed in their positions and/or forms or only the driver's seat may be changed in its position and/or form. Specifically, for example, the vertical length of the inflated seat cushion airbag **51 a** of the driver's seat **31** preferably is set to be the substantially same as that of the inflated seat cushion airbag **51a** of the other seats (namely, the substantially same size airbags **51a** are adopted), and when the vehicle rollover is predicted and detected by the controller **90,** the gas is released from each seat cushion airbag **51a** by adjusting or controlling the releasing volume properly.

Also, although the above-described embodiment adopts the seat cushion airbag unit **51** as the moving device, any other devices may be used in order to move the occupant's head toward the center of the vehicle **1** when the vehicle side crash or rollover is predicted by the controller **90.** For example, a device for leaning the seat, or a device for making the seat slide may be adopted. Also, another modification may be used as a device to lower the inboard portion of the occupant's buttocks (for example, the support member that is accommodated in the inboard portion of the seat cushion **33** and can change its height, or the seat mount **44** that is located below the inboard portion of the seat cushion 33 and can bend).

Also, although the above-described embodiment uses the seat cushion airbag **51 a** of the driver's seat **31** that preferably has the smaller volume than the seat cushion airbag **51 a** of the other seats, another modification instead may be applied where the gas releasing valve **51a** and the lap pre-tensioner **60b** of the driver's seat **31** have different properties from those of the other seats, namely, the operational speed, operational amount, and/or operational time of the gas releasing valve **51a** and the lap pre-tensioner **60b** of the driver's seat **31** are controlled or set to be smaller than those of the gas releasing valve **51 a** and the lap pre-tensioner **60b** of the other seats. Thereby, the similar function and effects can be obtained.

Also, although the above-described embodiment adopts the changing degree of the position or form of the driver's seat **31** being smaller than that of the other seats when the vehicle rollover is predicted by the controller **90,** the front seat comprised of the driver's seat **31** and the assistant's seat **32** may be applied, whose changing degree of the position or form is smaller that of the rear seat (for example, a second-row seat or a third-row seat).

Herein, the leaning of the upper portion or half of the occupant's body substantially toward the vehicle center is not suppressed by the seatbelt device **55** and the like. Therefore, in the case where the changing degree of the position and/or form of the driver's seat **31** is (or is set or controlled to be) smaller than that of the other seats including the assistant's seat **32** when the vehicle rollover is predicted by the controller **90,** the upper half or portion body of the occupant **P** seated in the assistant's seat **32** is inclined greatly substantially toward the driver **P** when the vehicle rollover is predicted, so there is a concern that the occupant **P** in the assistant's seat **32** and the driver **P** would contact each other. Accordingly, the above-described setting of the changing degree of the position and/or form of the front seat that is smaller than that of the rear seat may avoid the contact between the driver **P** and the occupant **P** in the assistant's seat. Thus, the driver **P** can maneuver the vehicle properly to possibly avoid the vehicle side crash or rollover.

### EMBODIMENT 2

According to a further preferred embodiment (embodiment 2), the driver's seat **31** does not comprise the above-described seat cushion airbag unit **51,** pressing airbag unit **54,** parallel bar **41,** link bar **42** and slide tensioner **43.** Therefore, only the driver's seat **31** does not change its position and/or form when the vehicle side crash or rollover is predicted by the controller **90.** Accordingly, when the vehicle side crash or rollover is predicted by the controller **90,** the upper portion or half body, or the head of the driver **P** is not moved toward the center of the vehicle **1.**

According to the present embodiment, when the vehicle side crash or rollover is predicted by the controller **90,** the occupants' heads seated in the seats other than the driver's seat are moved substantially toward the center of the vehicle by changing position or form of those seats. Namely, when the vehicle side crash or rollover is predicted by the controller **90,** the driver's seat position and/or form is not changed. Thus, the driver's position is not changed. Accordingly, when the vehicle side crash is relatively small, the vehicle rollover is in the early stage, or the vehicle side crash or rollover is predicted, the driver **P** can maneuver the vehicle properly to possibly avoid the vehicle side crash or rollover.

Meanwhile, since the occupant's head seated in at least one of the plural seats other than the driver's seat **31** is moved toward the center of the vehicle by changing position and/or form of the at least one of the plural seats when the vehicle side crash or rollover is predicted as described above, the protection performance of the occupant protection device **50** can be maintained on the high level.

Further, since the driver's position is not changed, the dangerous situation can be avoided in which the driver would stop operations of the brake pedal or the accelerator and thereby the vehicle traveling would become unstable.

Herein, when the vehicle traveling is in an unstable state, such as a traveling situation where the vehicle **1** is about to be rolled over receiving a relatively large lateral G acting on the vehicle **1** laterally, or where the vehicle **1** is rolled over, the movement of the upper half or portion of the occupant's body substantially toward the center of the vehicle would cause an inappropriate handling of the steering wheel **31a** by the driver **P,** so that the vehicle traveling possibly would become more unstable.

According to the present embodiment, the position and/or form of the driver's seat **31** is not changed when the vehicle side crash or rollover is predicted by the controller **90.** Thus, the movement of the upper half or portion of the driver's body toward the center of the vehicle **1** is suppressed, so the vehicle traveling can be prevented from becoming more unstable.

Herein, if the upper half or portion of the driver **P** leans substantially toward the center of the vehicle by lowering the inboard portion of driver's buttocks and/or raising the outboard portion of driver's buttocks when the vehicle travels with wheels located at either one side of vehicle contacting the ground surface as illustrated in FIG. **12,** the steering wheel **31a** that the driver **P** grips would be steered improperly toward the vehicle side of the wheels that do not contact on the ground surface. As a result, the vehicle rollover would be promoted.

According to the present embodiment, the position and/or form of the driver's seat **31** is not changed when the vehicle side crash or rollover is predicted by the controller **90** and the vehicle 1 travels with the either side of the vehicle contacting the ground surface. Thus, the movement of the upper half or portion of the driver's body toward the center of the vehicle **1** is suppressed, so the vehicle traveling can be prevented from becoming more unstable.

Herein, preferably only the driver's seat **31** has no seat cushion airbag unit **51** in the present embodiment. Namely, although all other seats than the driver's seat **31** have the seat cushion airbag unit **51,** this unit **51** may be provided at least one of the seats other than the driver's seat **31.**

### EMBODIMENT 3

According to a further preferred embodiment (embodiment 3), there is preferably provided a seat cushion support member **65** as the support portion and a hydraulic driving device **66** as the movement portion. Although hereinafter the present embodiment that is applied to the assistant seat will be described, this embodiment preferably can be applied to the driver's seat as well.

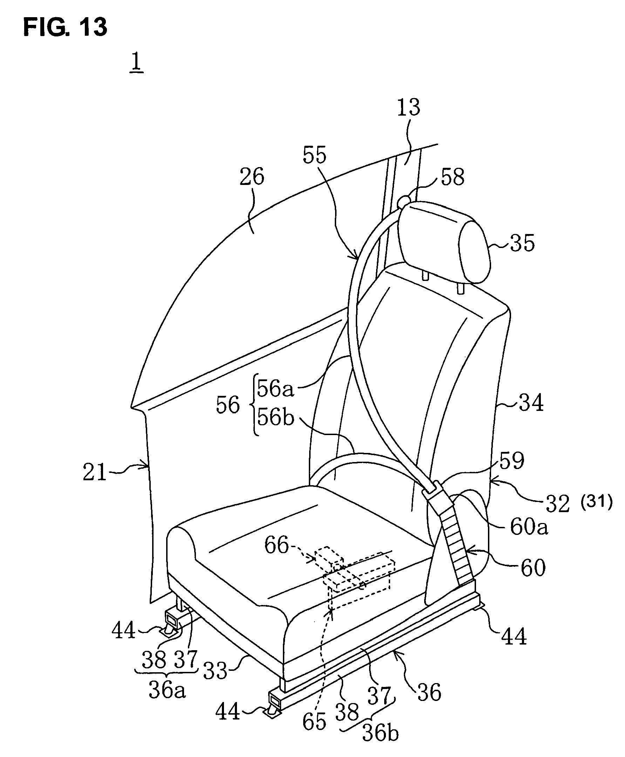

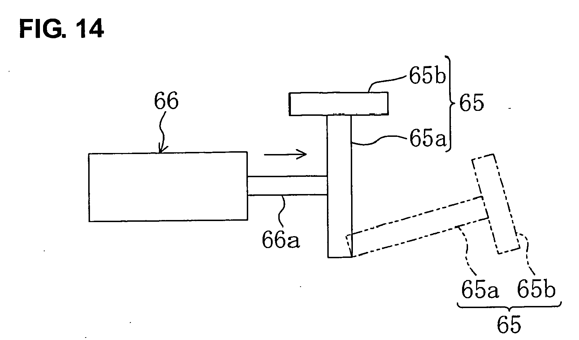

As illustrated in FIGS. **13, 14,** the seat cushion **33** is at least partly accommodated within a space at the inboard portion of the rear part of the seat cushion **33,** extending substantially longitudinally and supporting the inboard portion of buttocks of the occupant **P** seated in the seat. The seat cushion support member **65** preferably is formed with a T-cross section and includes a substantially vertical wall portion **65a** and a lateral wall portion **65b.** This support member **65** is rotatable or pivotable around an axis that extends substantially longitudinally and is located at or close to the lower end of the vertical wall portion **65a**. The lateral wall portion 65b is attached to or close to the upper end of the vertical wall portion **65a** so as to extend substantially in the vehicle width direction and is located below (right below, specifically) the inboard portion of the occupant's buttocks. The support member 65 has its normal position with the vertical wall portion **65a** that extends substantially in the vertical direction (see the support member **65** shown by solid lines in FIG. **14).** Meanwhile, when the vehicle side crash or rollover is predicted or detected by the controller **90,** the support member **65** is inclined, preferably substantially falls down inward (substantially toward the vehicle center), with its uppermost position being lower than that in its standing state (see the support member **65** shown by two-dotted broken lines in FIG. **14).** Thus, since the support member **65** changes from its standing state towards or to its fall state (namely, it is lowered) when the vehicle side crash and/or rollover is predicted or detected by the controller **90,** the inboard portion of the rear part of the seat cushion **33** is lowered by the weight of the occupant **P.** As a result, the upper half or portion body of the occupant **P** is inclined substantially toward the vehicle center, the upper half or portion body, particularly the head of the occupant **P** is moved substantially toward the vehicle center. Thus, the support member **65** is inclined or pivoted substantially inward, or in a direction substantially away from the occupant **P,** the occupant **P** can be prevented from feeling uncomfortable.

The driving device **66** preferably includes a rod **66a** and is located outboard the support member **65** in the seat cushion **33.** The rod **66a** extends and pushes the vertical wall portion **65a** inward according to the prediction or detection of the vehicle side crash or rollover by the controller **90,** so the support member **65** rotates or pivots around the axis. Thereby, the support member changes from its standing state towards or to its fall state in the short time (of e.g. about 3 seconds, preferably in about 1.6 seconds).

Accordingly, the present' embodiment can attain the function and effects that are similar to those of the previous embodiments.

### EMBODIMENT 4

According to still a further preferred embodiment (embodiment 4) of the present invention, there are included both seat mounts **44** of the second slide portions **36b** as the support portion and a hydraulic driving device **67** as the movement portion. Although hereinafter the present embodiment that is applied to the assistant seat will be described, this embodiment preferably can be applied to the driver's seat as well.

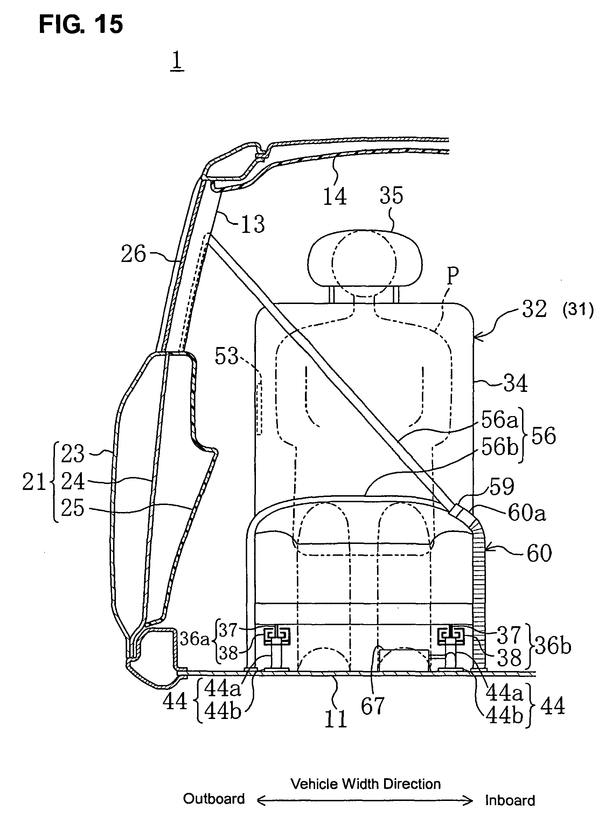

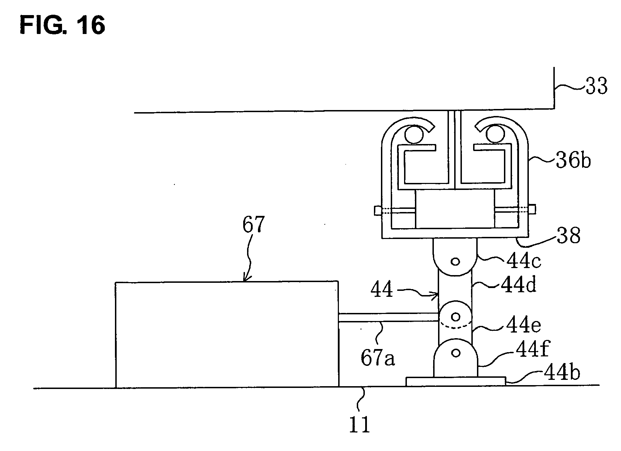

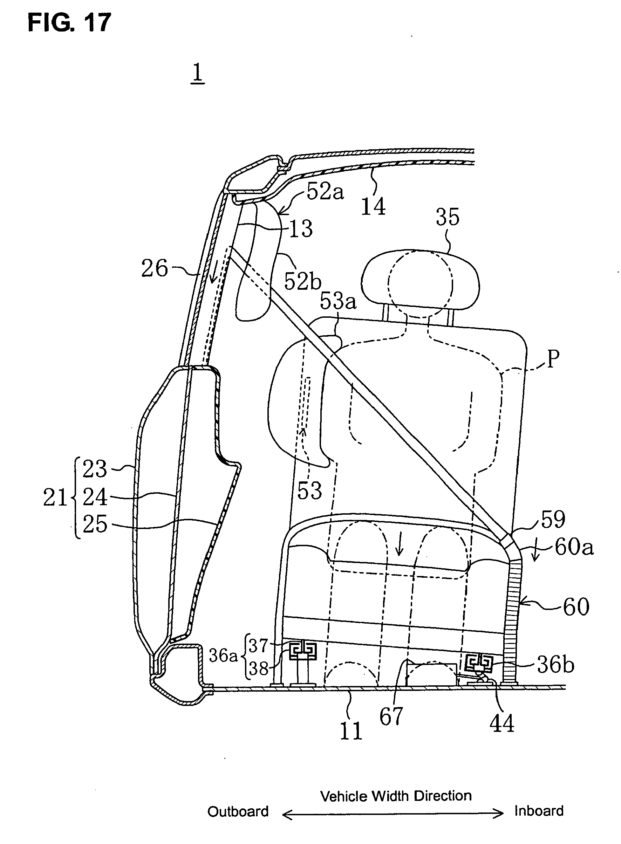

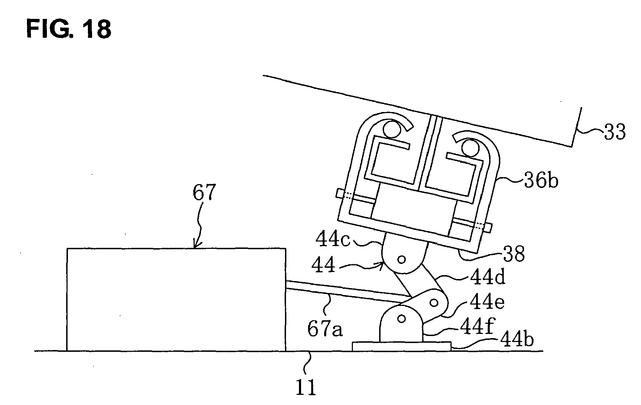

As illustrated in FIGS. **15** - **18,** the shaft members **44a** of the both seat mounts **44** of the second slide portion **36b** can bend, and each shaft member **44a** includes a first shaft portion **44c,** second shaft portion **44d,** third shaft portion **44e,** and forth shaft portion **44f.** The first shaft portion **44c** is fixed to the lower face of the lower guide portion **38** of the second slide portion **36b.** The second shaft portion **44d** is attached rotatably or pivotably to the first shaft member **44c** around an axis extending substantially longitudinally at or close to its upper end, and to the upper end of the third shaft portion **44e** around an axis extending substantially longitudinally at or close to its lower end. The third shaft portion **44e** is attached rotatably or pivotably to the forth shaft member **44f** around an axis extending substantially longitudinally at or close to its lower end. The fourth shaft portion **44f** is attached to the upper face of the bottom plates **44b.** Each seat mount **44** of the second slide portion **36b** has its normal standing state with the shaft member **44a** extending substantially in the vertical direction (see FIGS. **15** and **16).** When the vehicle side crash or rollover is predicted or detected by the controller **90,** the seat amount **44** has its bent state where the shaft member **44a** is bent inward at a connecting portion between the second and third shaft portions **44d, 44e** (see FIGS. **17** and **18).** Thus, since the seat mount **44** of the second slide portion **36b** changes from its standing state to its bent or inclined state receiving weights of the occupant **P** and the seat when the vehicle side crash or rollover is predicted or detected by the controller **90,** the seat is inclined such that the inboard portion of the rear part of the seat cushion **33** is lowered. As a result, the upper portion or half body of the occupant **P** is inclined toward the vehicle center, the upper half body or upper body portion, particularly the head of the occupant **P** is moved substantially toward the vehicle center.

The driving device **67** includes a rod **67a** and is located outboard the seat mount **44** on the seat floor panel **11.** The rod **67a** is coupled to the connecting portion between the second and third shaft portions **44e, 44e.** The rod **67a** extends and pushes this connecting portion inward according to the prediction or detection of the vehicle side crash or rollover by the controller **90.** Thereby, the seat mount **44** changes from its standing state to its bent state in the short time of e.g. about 3 seconds, preferably in about 1.6 seconds.

The other end of the seat belt **56** is fixed to the outboard end of the upper face of the floor panel **11.** The buckle portion **60** is fixed to the center of the upper face of the floor panel **11.** Namely, the inboard end (the end located at the vehicle center side) of the seatbelt device **55.**

As described above, according to the present embodiment, since the support portion is comprised of the seat mount **44,** the seat cushion needs not to be modified substantially, so the comfortable sitting of the seat can be maintained properly.

Herein, although the buckle portion **60** is fixed to the center of the upper face of floor panel **11** in the present embodiment, it may be attached to the inboard end portion of the seat cushion **33.**

Also, although the other end of the seat belt **56** is fixed to the outboard end of the upper face of floor panel **11** in the present embodiment, it may be attached to the outboard end the seat.

Also, although the seat mount **44** of the second slide portion **36b** changes from its standing state to its bent state when the vehicle side crash or rollover is predicted by the controller 90 in the present embodiment, the seat mount **44** of the second slide portion 36b may be removed by any means.

### MODIFICATIONS OF EMBODIMENTS

Although the controller **90** of the above-described embodiments predict and detect the side crash and rollover of the vehicle **1,** it may be the device to predict or detect the side crash or rollover of the vehicle **1.**

Also, although the inboard portion of the buttocks of the occupant **P** is lowered when the vehicle side crash or rollover is predicted in the above-described embodiments, it may be lowered when the vehicle side crash or rollover is detected by the controller **90.** From the viewpoint of secure protection of the occupant **P,** however, it may be preferable that it is lowered when the vehicle side crash or rollover is predicted by the controller **90.**

Also, although the retractor of the seatbelt device **55** is attached at the lower portion of the pillar **13** in the above-described embodiments, it may be disposed in the seat back **34.**

Also, the buckle portion **60** may be attached to the center portion of the upper face of the floor panel **11** instead of to the inboard end of the seat cushion **33** of the seat like the above-described embodiments. In this case, the lap pre-tensioner **60b** and the shoulder pre-tensioner may be operated after the seat position is changed. Herein, it is preferable that the lap pre-tensioner **60b** and the shoulder pre-tensioner is operated even if the seat operation is underway when the vehicle side crash or rollover is detected by the controller **90.**

Also, although the shoulder pre-tensioner is operated after the operation of the lap pre-tensioner **60b** in the above-described embodiments, only the lap pre-tensioner **60b** may be operated from the viewpoint of promoting the occupant's head movement toward the vehicle center by the seat cushion airbag unit **51.**

Also, the outboard end portion of the lap belt portion **56b** may be pulled down instead of the inboard end portion of that when the vehicle side crash or rollover is predicted by the controller **90.** Herein, it may be preferable that the inboard end portion of the lap belt portion **56b** is pulled down from the viewpoint of moving surely the occupant's head toward the vehicle center.

Also, the above-described slide tensioner **43** may be provided at both the first and second slide portions **36a, 36b,** instead of only at the first slide portion **36a.**

Also, the occupant's head is moved to the specified (predetermined or predeterminable) position near the pillar **13** by making the parallel bar **41** contact the rear end of the slot **38e** of the lower guide member **38** with the operation of the slide tensioner **43** when the vehicle side crash or rollover is predicted by the controller **90** in the above-described embodiment. Herein, the occupant's head may be moved to the specified near the pillar **13** with the operation of the slide tensioner **43** based on the detection data from the seat position sensor **78** and the rearward-inclined angle sensor **79.**

Also, although both inflators of the side airbag unit **53** and the pressing airbag unit **54** are operated substantially concurrently (namely, the both airbags **53a**, **54a** are inflated at the substantially same time), the inflator of the pressing airbag unit **54** may be inflated right after the operation of the inflator of the side airbag unit **53** (namely, just after the side airbag **53a** is operated, for example, in a few milliseconds after the operation of the inflator of the side airbag unit **53).**

Also, although the pressing airbag **54a** is used as the pressing device in the above-described embodiment, any other means to push the outboard portion of the occupant inward instead of the airbag may be used.

Also, the pressing airbag **54a** may be provided at the pillar **13** or the side wall portion instead of or additionally to at the side door of the above-described embodiment. Herein, it may be preferable that the pressing airbag **54a** is located to be opposed to the outboard portion of the occupant's chest is substantially opposed to said pressing device when the vehicle side crash or rollover is detected by the controller **90,** so that the occupant **P** can be pushed surely inward.

Also, although the above-described pressing airbag **54a** pushes the occupant **P** via the side airbag **53a,** the occupant **P** may be pushed by the pressing airbag **54a** directly without the side airbag **53a.** In this case, it is preferable that the pressing airbag **54a** has a relatively long length in the longitudinal direction, for example, the longitudinal length of the pressing airbag **54a** is configured so as to be longer than that of the vertical length of the airbag **54a.** Thereby, the occupant **P** can be directly pushed surely by the pressing airbag **54a**.

Also, the side airbag **53a** may be operated when the controller **90** predicts the vehicle side crash or rollover, instead of when the controller 90 detects those like the above-described embodiment. In this case, it is preferable that the pressing airbag **54a** is operated when the vehicle side crash or rollover is predicted (namely, at the same time, or right after the operation of the side airbag **53a**) so that the occupant P can be pushed surely by the pressing airbag **54a** via the side airbag **53a.**

Also, although the seat position is changed when the controller 90 predicts the vehicle side crash or rollover in the above-described embodiment, the seat may not hanged in position. In this case, it is preferable that the pressing airbag **54a** has the relatively long length in the longitudinal direction, for example, the longitudinal length of the pressing airbag **54a** is configured so as to be longer than that of the vertical length of the airbag **54a** so that the occupant **P** can be pushed surely by the pressing airbag **54a.**

Also, the seat position may be changed when the controller **90** detects the vehicle side crash or rollover instead of when the controller **90** predicts the vehicle side crash or rollover. In any case, it is preferable that the seat positron is changed before the operation of the pressing airbag **54a** such that the outboard portion of the occupant's chest is located to be opposed to the pressing airbag **54a.** Thereby, the occupant **P** can be pushed surely inward.

Also, any slide mechanisms other than the mechanism disclosed in the above-described embodiment can be applied as long as the seat is moved longitudinally.

Also, any drive devices other than the slide tensioner **43** disclosed in the above-described embodiment can be applied as long as the slide mechanism **36** is operated so as to locate the occupant **P** being substantially opposed to the pressing airbag **54a** when the vehicle side crash or rollover is predicted or detected by the controller **90.**

The present invention should not be limited to the above-described embodiment, and any modifications and improvements can be applied within the scope of a sprit of the present invention.

## Claims

1. An occupant protection device **(50)** for a vehicle **(1),** comprising:
a determining device **(90)** operative to electrically predict or detect a vehicle side crash or rollover; and
a moving device **(51a, 51c; 65, 66; 44, 67)** operative to move a head of an occupant **(P)** seated in a seat **(31; 32)** substantially toward a center of the vehicle (1), preferably substantially without a rise in a position of the occupant's head, when the vehicle side crash or rollover is predicted or detected by said determining device (90).

2. The occupant protection device **(50)** for a vehicle **(1)** of claim 1, wherein said moving device comprises a support portion **(51a; 65; 44)** operative to support an inboard portion of buttocks of the occupant **(P),** and a movement portion **(51c; 66; 67)** operative to deform, change and/or remove said support portion **(51a; 65; 44),** thereby lowering the inboard portion of the occupants' buttocks when the vehicle side crash or rollover is predicted or detected by said determining device **(90).**

3. The occupant protection device **(50)** for a vehicle **(1)** of claim 2, wherein said support portion **(51a; 65)** is at least partly accommodated in an inboard portion of a seat cushion **(33)** of the seat **(31; 32),** and said movement portion **(51c; 66)** is configured so as to deform and/or change said support portion **(51a; 65).**

4. The occupant protection device **(50)** for a vehicle **(1)** of claim 2 or 3, wherein said support portion comprises a seat mount **(44)** that is located substantially below an inboard portion of the seat **(31; 32),** and said movement portion **(67)** is configured so as to bend or remove said seat mount **(44).**

5. The occupant protection device **(50)** for a vehicle **(1)** of one of the preceding claims, further comprising a seatbelt device **(55)** whose inboard end portion is fixed to or near an inboard end portion of the seat **(31; 32),** wherein said seatbelt device **(55)** comprises a seatbelt **(56)** to restrain the occupant **(P)** in the seat **(31; 32)** and a tension mechanism **(60b)** to apply a tension to said seatbelt **(56)** according to a movement of said movement portion **(51c),** thereby restraining a lower portion of an occupant's body in the seat cushion **(33).**

6. The occupant protection device **(50)** for a vehicle **(1)** of one of the preceding claims, further comprising a seatbelt device **(55)** whose inboard end portion is fixed to or near a central portion of a vehicle body, wherein said seatbelt device **(55)** comprises a seatbelt **(56)** to restrain the occupant **(P)** in the seat **(31; 32)** and a tension mechanism **(60b)** to apply a tension to said seatbelt **(56)** according to a movement of said movement portion (**51c**), thereby restraining a lower portion of an occupant's body in the seat cushion **(33).**

7. The occupant protection device **(50)** for a vehicle **(1)** of claim 5 or 6, wherein said tension mechanism **(60b)** is configured so as to apply the tension to said seatbelt **(56)** according to the movement of said movement portion **(51c),** thereby restraining the lower portion of the occupant's body in the seat cushion **(33)** and an upper portion of the occupant's body in a seat back **(34),** a restraint timing of the lower portion of the occupant's body in the seat cushion **(33)** being earlier than that of upper portion of the occupant's body in the seat back **(34),** or a restraint force of the lower portion of the occupant's body in the seat cushion **(33)** being greater than that of the upper portion of the occupant's body in the seat back **(34)** along with the substantially same restraint timing.

8. The occupant protection device **(50)** for a vehicle **(1)** of one of the preceding claims, further comprising a pressing device (**54a**) that is provided at a side door **(21),** a pillar and/or a side wall portion of the vehicle **(1)** and operative to push the occupant **(P)** inward during or after an operation of said moving device **(51a, 51c).**

9. The occupant protection device **(50)** for a vehicle **(1)** of claim 8, wherein said pressing device **(54a)** is configured so as to push an outboard portion of an occupant's chest inward.

10. The occupant protection device **(50)** for a vehicle **(1)** of claim 8 or 9, wherein said pressing device **(54a)** is configured so as to operate after the operation of said moving device (**51a**, **51c**).

11. The occupant protection device **(50)** for a vehicle **(1)** of claim 8, 9 or 10, wherein said pressing device comprises a pressing airbag **(54a)** operative to be inflated substantially inward after the vehicle side crash or rollover is predicted and when the vehicle side crash or rollover is detected by said determining device (90).

12. The occupant protection device **(50)** for a vehicle **(1)** of one of the preceding claims, further comprising a side airbag **(53a)** that is accommodated within the seat **(31; 32)** and operative to be inflated so as to cover an outboard portion of an upper portion of an occupant's body when the vehicle side crash or rollover is predicted or detected by said determining device **(90),** and preferably said pressing device comprises a pressing airbag **(54a)** operative to be inflated substantially inward and push said side airbag **(53a)** inward that is under inflation or inflated.

13. The occupant protection device **(50)** for a vehicle **(1)** of one of the preceding claims in combination with claim 8, further comprising a seat slide mechanism **(36)** to enable the seat **(31; 32)** to slide in a vehicle longitudinal direction, and a drive device **(43)** to operate said seat slide mechanism **(36),** wherein the seat **(31; 32)** is positioned by said seat slide mechanism **(36)** when the vehicle side crash or rollover is predicted or detected by said determining device **(90)** in such a manner that an outboard portion of the occupant **(P)** is at least partly opposed to said pressing device **(54a).**

14. The occupant protection device **(50)** for a vehicle **(1)** of one of the preceding claims, wherein said moving device **(51a, 51c)** is configured so as to lower an inboard portion of buttocks of the occupant **(P)** when the vehicle side crash or rollover is predicted or detected by said determining device **(90).**

15. The occupant protection device **(50)** for a vehicle **(1)** of one of the preceding claims, wherein the vehicle **(1)** includes a plurality of seats **(31, 32)** including a driver's seat **(31),** and said moving device **(51 a, 51c)** is configured so as to move the occupants' heads seated in said plural seats **(31, 32)** substantially toward the center of the vehicle **(1)** by changing positions or forms of the plural seats **(31, 32)** in such a manner that a changing degree of the position or form of the driver's seat **(31)** is smaller than that of a seat **(32)** other than the driver's seat **(31).**

16. The occupant protection device **(50)** for a vehicle **(1**) of one of the preceding claims, wherein the vehicle **(1)** includes a plurality of seats **(31, 32)** including a driver's seat **(31),** and said moving device (**51a**, **51c**) is configured so as to move the occupant's head seated in at least one **(32)** of said plural seats that is other than the driver's seat **(31)** toward the center of the vehicle (**1**) by changing position and/or form of said at least one **(32)** of the plural seats.

17. The occupant protection device **(50)** for a vehicle **(1)** of claim 15 or 16, wherein said determining device **(90)** is configured so as to predict or detect the vehicle rollover, and said moving device **(51a, 51c)** is configured so as to move an upper portion of body of said occupant **(P)** substantially toward the center of the vehicle **(1)** when the vehicle rollover is predicted or detected by said determining device **(90).**

18. The occupant protection device **(50)** for a vehicle **(1)** of one of the preceding claims, wherein said moving device **(51a, 51c)** is configured so as to lower an inboard portion of buttocks of said occupant **(P)** or raise an outboard portion of buttocks of said occupant **(P)** when the vehicle rollover is predicted or detected by said determining device **(90)** and the vehicle **(1)** travels with wheels located at either one side of vehicle contacting a ground surface.

19. The occupant protection device **(50)** for a vehicle **(1)** of claim 15, wherein said determining device **(90)** is configured so as to predict or detect the vehicle rollover, said moving device **(51a, 51c)** is configured so as to move an upper portion of body of said occupant **(P)** toward the center of the vehicle **(1)** when the vehicle rollover is predicted or detected by said determining device **(90),** and said changing degree of the position or form of the driver's seat **(30)** is configured so as to be smaller than that of the seat **(32)** other than the driver's seat **(31)** when the vehicle rollover is predicted and to be substantially the same as that of the seat **(32)** other than the driver's seat **(31)** after the vehicle rollover is predicted and when the vehicle rollover is detected by said determining device **(90).**

20. An occupant protection method for a vehicle **(1),** comprising the following steps:
predicting and/or detecting a vehicle side crash or rollover; and
moving a head of an occupant **(P)** seated in a seat **(31; 32)** substantially toward a center of the vehicle **(1),** preferably substantially without a rise in a position of the occupant's head, by means of a moving device **(51a, 51c; 65, 66; 44, 67)** when the vehicle side crash or rollover is predicted or detected.
